(19) Europäisches Patentamt
European Patent Office
Office européen des brevets

(11) EP 4 443 805 A1

(12) EUROPEAN PATENT APPLICATION

(43) Date of publication:
**09.10.2024 Bulletin 2024/41**

(21) Application number: **24168847.2**

(22) Date of filing: **05.04.2024**

(51) International Patent Classification (IPC):
***H04L 5/00*** (2006.01) ***H04B 7/00*** (2006.01)

(52) Cooperative Patent Classification (CPC):
**H04L 5/0057; H04B 7/00; H04L 5/0023; H04L 5/005; H04L 5/0053; H04L 5/0094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 US 202363457440 P**

(71) Applicant: **FG Innovation Company Limited**
**Hong Kong (HK)**

(72) Inventors:
- **TSENG, Tzu-Yueh**
  **236 New Taipei City (TW)**
- **TSENG, Yung-Lan**
  **236 New Taipei City (TW)**
- **LI, Yen-Hua**
  **236 New Taipei City (TW)**
- **CHOU, Po-Chun**
  **236 New Taipei City (TW)**

(74) Representative: **Müller Hoffmann & Partner Patentanwälte mbB**
**St.-Martin-Straße 58**
**81541 München (DE)**

# (54) USER EQUIPMENT, BASE STATION, AND METHOD FOR REPORTING CHANNEL STATE INFORMATION

(57) A method performed by a User Equipment (UE) for reporting Channel State Information (CSI) is provided. The method receives, from a Base Station (BS), a CSI-Reference Signal (CSI-RS) resource set configuration. The method receives, from the BS, a CSI report configuration including a first resource configuration identifier (ID) corresponding to the CSI-RS resource set configuration, a report content configuration, and multiple port indicators, each of the port indicators corresponding to a CSI measurement result based on a subset of antenna ports. The method receives, from the BS, Downlink Control Information (DCI) for triggering an aperiodic CSI report associated with the CSI report configuration. In response to receiving the DCI, the method transmits, to the BS, a CSI report associated with the CSI report configuration.

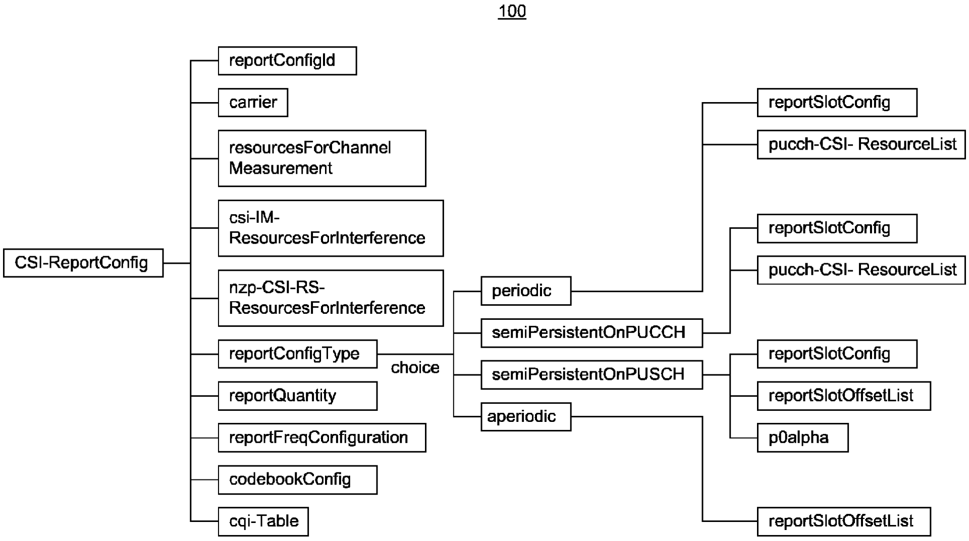


FIG.1



Processed by Luminess, 75001 PARIS (FR)

## Description

### CROSS-REFERENCE TO RELATED APPLICATION(S)

The present disclosure claims the benefit of and priority to U.S. Provisional Patent Application Serial No. 63/457,440, filed on April 6, 2023, entitled "MECHANISM OF SPATIAL DOMAIN ADAPTATION FOR NETWORK ENERGY SAVINGS," the content of which is hereby incorporated herein fully by reference into the present disclosure for all purposes.

### FIELD

The present disclosure is related to wireless communication and, more specifically, to user equipment (UE), base station (BS), and method for reporting Channel State Information (CSI) in cellular wireless communication networks.

### BACKGROUND

Various efforts have been made to improve different aspects of wireless communication for cellular wireless communication systems, such as the $5^{th}$ Generation (5G) New Radio (NR), by improving data rate, latency, reliability, and mobility. The 5G NR system is designed to provide flexibility and configurability to optimize network services and types, accommodating various use cases, such as enhanced Mobile Broadband (eMBB), massive Machine-Type Communication (mMTC), and Ultra-Reliable and Low-Latency Communication (URLLC). As the demand for radio access continues to increase, however, there exists a need for further improvements in the art.

### SUMMARY

The present disclosure is related to a UE, a BS, and a method for reporting CSI in cellular wireless communication networks.

In a first aspect of the present application, a method performed by a UE for reporting CSI is provided. The method includes receiving, from a BS, a CSI-Reference Signal (CSI-RS) resource set configuration; receiving, from the BS, a CSI report configuration including a first resource configuration identifier (ID) corresponding to the CSI-RS resource set configuration, a report content configuration, and multiple port indicators, each of the port indicators corresponding to a CSI measurement result based on a subset of antenna ports; receiving, from the BS, Downlink Control Information (DCI) for triggering an aperiodic CSI report associated with the CSI report configuration; and transmitting, to the BS, a CSI report associated with the CSI report configuration in response to receiving the DCI.

In some implementations of the first aspect, each of the port indicators includes a bitmap having a length equal to a number of antenna ports of a CSI-RS resource configured in the CSI-RS resource set configuration, and each of the port indicators corresponds to a different subset of antenna ports of the CSI-RS resource.

In some implementations of the first aspect, the method further includes receiving, from the BS, a CSI aperiodic trigger state configuration including a CSI report configuration ID corresponding to the CSI report configuration.

In some implementations of the first aspect, the CSI report configuration ID is associated with at least one sub-configuration ID, and each sub-configuration ID may correspond to one of the port indicators.

In some implementations of the first aspect, the CSI report includes at least one CSI measurement result corresponding to the at least one sub-configuration ID.

In a second aspect of the present application, a UE for reporting CSI is provided. The UE includes at least one processor and at least one non-transitory computer-readable medium storing one or more instructions that, when executed by the at least one processor, cause the UE to: receive, from a BS, a CSI-RS resource set configuration; receiving, from the BS, a CSI report configuration including a first resource configuration ID corresponding to the CSI-RS resource set configuration, a report content configuration, and multiple port indicators, each of the port indicators corresponding to a CSI measurement result based on a subset of antenna ports; receiving, from the BS, DCI for triggering an aperiodic CSI report associated with the CSI report configuration; and transmitting, to the BS, a CSI report associated with the CSI report configuration in response to receiving the DCI.

In a third aspect of the present application, a BS for configuring CSI reporting is provided. The BS includes at least one processor and at least one non-transitory computer-readable medium storing one or more instructions that, when executed by the at least one processor, cause the BS to: transmit, to a UE, a CSI-RS resource set configuration; transmit, to the UE, a CSI report configuration including a first resource configuration ID corresponding to the CSI-RS resource set configuration, a report content configuration, and multiple port indicators, each of the port indicators corresponding to a CSI measurement result based on a subset of antenna ports; transmit, to the UE, DCI for triggering an aperiodic CSI report associated with the CSI report configuration; and receive, from the UE, a CSI report associated with the CSI report configuration after transmitting the DCI.

## BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.

FIG. 1 is a diagram illustrating an example data structure of an information element (IE) *CSI-ReportConfig*, according to an example implementation of the present disclosure.
FIG. 2 is a diagram illustrating an example data structure of an IE *CSI-AperiodicTriggerState*, according to an example implementation of the present disclosure.
FIG. 3 is a diagram illustrating a table listing association between a pair of ($N_1$, $N_2$) and a layout of a CSI antenna port array, according to an example implementation of the present disclosure.
FIG. 4 is a diagram illustrating association between a spatial pattern and a Transceiver Unit (TxRU) on-off scheme layout pattern, according to an example implementation of the present disclosure.
FIG. 5 is a diagram illustrating association between a spatial pattern and an antenna beam pattern, according to an example implementation of the present disclosure.
FIG. 6 is a diagram illustrating one-to-one mapping between a CSI-RS resource and a spatial pattern, according to an example implementation of the present disclosure.
FIG. 7 is a diagram illustrating one-to-many mapping between a CSI-RS resource and spatial patterns, according to an example implementation of the present disclosure.
FIG. 8 is a diagram illustrating an example data structure of an IE *CSI-AperiodicTriggerState*, according to an example implementation of the present disclosure.
FIG. 9 is a diagram illustrating an example data structure of an IE *CSI-AperiodicTriggerState*, according to an example implementation of the present disclosure.
FIG. 10 is a diagram illustrating an infeasible subset of CSI-RS ports, according to an example implementation of the present disclosure.
FIG. 11A is a diagram illustrating a time-frequency resource allocation within a resource block corresponding to the *frequencyDomainAllocation* = ’011011’, according to an example implementation of the present disclosure.
FIG. 11B is a diagram illustrating a time-frequency resource allocation within a resource block corresponding to a mask in the frequency domain = ‘0111’ and a mask in the time domain = ’1111’, according to an example implementation of the present disclosure.
FIG. 11C is a diagram illustrating a time-frequency resource allocation within a resource block corresponding to a mask in the frequency domain = ’0010’ and a mask in the time domain = ’1111’, according to an example implementation of the present disclosure.
FIG. 11D is a diagram illustrating a time-frequency resource allocation within a resource block corresponding to a mask in the frequency domain = ’0001’ and a mask in the time domain = ’0001’, according to an example implementation of the present disclosure.
FIG. 11E is a diagram illustrating a time-frequency resource allocation within a resource block corresponding to a combination of masks used in FIG. 11C and masks used in FIG. 11D, according to an example implementation of the present disclosure.
FIG. 12 is a diagram illustrating a procedure for a dynamic indication of spatial patterns, according to an example implementation of the present disclosure.
FIG. 13 is a diagram illustrating multiple CSI-RS spatial patterns transmission between the serving Radio Access Network (RAN) and a UE, according to an example implementation of the present disclosure.
FIG. 14 is a diagram illustrating association between a CSI report configuration and a CSI report sub-configuration, according to an example implementation of the present disclosure.
FIG. 15 is a diagram illustrating an example *CSI-ReportSubConfig* as a delta configuration, according to an example implementation of the present disclosure.
FIG. 16 is a diagram illustrating an example data structure of an IE *CSI-AperiodicTriggerState*, according to an example implementation of the present disclosure.
FIG. 17 is a diagram illustrating a Medium Access Control (MAC) Control Element (CE) for activation/deactivation of semi-persistent CSI reporting, according to the 3rd Generation Partnership Project (3GPP) Technical Specification (TS).
FIG. 18 is a diagram illustrating a MAC CE for activation/deactivation of spatial patterns, according to an example implementation of the present disclosure.
FIG. 19 is a diagram illustrating a MAC CE for indicating spatial patterns for different Bandwidth Parts (BWPs) on different Component Carrier (CCs), according to an example implementation of the present disclosure.

FIG. 20 is a flowchart illustrating a method/process performed by a UE for reporting CSI, according to an example implementation of the present disclosure.

FIG. 21 is a flowchart illustrating a method/process performed by a BS for configuring CSI reporting, according to an example implementation of the present disclosure.

FIG. 22 is a block diagram illustrating a node for wireless communication, according to an example implementation of the present disclosure.

## DESCRIPTION

Some abbreviations used in the present disclosure include:

| Abbreviation | Full name |
|---|---|
| 3GPP | 3rd Generation Partnership Project |
| 5G | 5th Generation |
| 5GC | 5G Core Network |
| A-CSI | Aperiodic CSI |
| ACK | Acknowledgment |
| AS | Access Stratum |
| BS | Base Station |
| BWP | Bandwidth Part |
| CDM | Code Division Multiplexing |
| C-RNTI | Cell Radio Network Temporary Identifier |
| CA | Carrier Aggregation |
| CC | Component Carrier |
| CG | Configured Grant |
| CN | Core Network |
| CQI | Channel Quality Indicator |
| CRI | CSI-RS Resource Indicator |
| CSI | Channel State Information |
| CSI-RS | Channel State Information Reference Signal |
| DC | Dual Connectivity |
| DCI | Downlink Control Information |
| DL | Downlink |
| DRB | Data Radio Bearer |
| EPC | Evolved Packet Core |
| E-UTRAN | Evolved Universal Terrestrial Radio Access Network |
| FR | Frequency Range |
| ID | Identifier |
| IE | Information Element |
| IM | Interference Measurement |
| L1 | Layer 1 |
| L3 | Layer 3 |
| LI | Layer Indicator |
| LSB | Least Significant Bit |
| LTE | Long Term Evolution |
| MAC | Medium Access Control |
| MAC CE | MAC Control Element |
| MCG | Master Cell Group |
| MIB | Master Information Block |
| MIMO | Multiple Input Multiple Output |
| MN | Master Node |
| MR-DC | Multi-Radio Dual Connectivity |
| MSB | Most Significant Bit |
| NAS | Non Access Stratum |
| NDI | New Data Indicator |
| NES | Network Energy Saving |
| NG-RAN | Next Generation Radio Access Network |

| | |
|---|---|
| NR | New Radio |
| NW | Network |
| NZP | Non Zero Power |
| OFDM | Orthogonal Frequency Division Multiplexing |
| PBCH | Physical Broadcast Channel |
| PCell | Primary Cell |
| PDCCH | Physical Downlink Control Channel |
| PDSCH | Physical Downlink Shared Channel |
| PHY | Physical (layer) |
| PMI | Precoding Matrix Indicator |
| PRACH | Physical Random Access Channel |
| PRB | Physical Resource Block |
| PSCell | Primary SCG Cell |
| PUCCH | Physical Uplink Control Channel |
| PUSCH | Physical Uplink Shared Channel |
| QCL | Quasi Co-Location |
| RA | Random Access |
| RAN | Radio Access Network |
| RAR | Random Access Response |
| RAT | Radio Access Technology |
| Rel | Release |
| RE | Resource Element |
| RF | Radio Frequency |
| RI | Rank Indicator |
| RNTI | Radio Network Temporary Identifier |
| RRC | Radio Resource Control |
| RS | Reference Signal |
| RSRP | Reference Signal Received Power |
| RSRQ | Reference Signal Received Quality |
| RSSI | Received Signal Strength Indication |
| SCell | Secondary Cell |
| SCG | Secondary Cell Group |
| SI | System Information |
| SIB | System Information Block |
| SINR | Singal to Interference plus Noise Ratio |
| SL | Sidelink |
| SN | Secondary Node |
| SP-CSI-RNTI | Semi-Persistent CSI RNTI |
| SS | Synchronization Signal |
| SSB | Synchronization Signal Block |
| SSBRI | SS/PBCH Block Resource Indicator |
| TA | Tracking Area |
| TB | Transport Block |
| TCI | Transmission Configuration Indicator |
| TDRA | Time Domain Resource Assignment |
| TRP | Transmission Reception Point |
| TS | Technical Specification |
| TTI | Transmission Time Interval |
| TxRU | Transceiver Unit |
| UE | User Equipment |
| UL | Uplink |
| UL-SCH | Uplink Shared Channel |
| URLLC | Ultra-Reliable and Low-Latency Communication |

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and may not be narrowly confined to what is illustrated in the drawings.

References to "one implementation," "an implementation," "example implementation," "various implementations," "some implementations," "implementations of the present application," etc., may indicate that the implementation(s) of the present application so described may include a particular feature, structure, or characteristic, but not every possible implementation of the present application necessarily includes the particular feature, structure, or characteristic. Further, repeated use of the phrase "In some implementations," or "in an example implementation," "an implementation," do not necessarily refer to the same implementation, although they may. Moreover, any use of phrases like "implementations" in connection with "the present application" are never meant to characterize that all implementations of the present application must include the particular feature, structure, or characteristic, and should instead be understood to mean "at least some implementations of the present application" includes the stated particular feature, structure, or characteristic. The term "coupled" is defined as connected, whether directly or indirectly through intervening components, and is not necessarily limited to physical connections. The term "comprising," when utilized, means "including, but not necessarily limited to"; it specifically indicates openended inclusion or membership in the so-described combination, group, series, and the equivalent.

The expression "at least one of A, B and C" or "at least one of the following: A, B and C" means "only A, or only B, or only C, or any combination of A, B and C." The terms "system" and "network" may be used interchangeably. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

For the purposes of explanation and non-limitation, specific details, such as functional entities, techniques, protocols, and standards, are set forth for providing an understanding of the disclosed technology. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software, or a combination of software and hardware. Disclosed functions may correspond to modules which may be software, hardware, firmware, or any combination thereof.

A software implementation may include computer executable instructions stored on a computer-readable medium, such as memory or other type of storage devices. One or more microprocessors or general-purpose computers with communication processing capability may be programmed with corresponding executable instructions and perform the disclosed network function(s) or algorithm(s).

The microprocessors or general-purpose computers may include Application-Specific Integrated Circuits (ASICs), programmable logic arrays, and/or one or more Digital Signal Processor (DSPs). Although some of the disclosed implementations are oriented to software installed and executing on computer hardware, alternative implementations implemented as firmware, as hardware, or as a combination of hardware and software are well within the scope of the present disclosure. The computer-readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture such as a Long-Term Evolution (LTE) system, an LTE-Advanced (LTE-A) system, an LTE-Advanced Pro system, or a 5G NR Radio Access Network (RAN) typically includes at least one base station (BS), at least one UE, and one or more optional network elements that provide connection within a network. The UE communicates with the network such as a Core Network (CN), an Evolved Packet Core (EPC) network, an Evolved Universal Terrestrial RAN (E-UTRAN), a 5G Core (5GC), or an internet via a RAN established by one or more BSs.

A UE may include, but is not limited to, a mobile station, a mobile terminal or device, or a user communication radio terminal. The UE may be a portable radio equipment that includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a RAN.

The BS may be configured to provide communication services according to at least a Radio Access Technology (RAT) such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic wideband-code division multiple access (W-CDMA), high-speed packet access (HSPA), LTE, LTE-A, evolved LTE (eLTE) that is LTE connected to 5GC, NR (often referred to as 5G), and/or LTE-APro. However, the scope of the present disclosure is not limited to these protocols.

The BS may include, but is not limited to, a node B (NB) in the UMTS, an evolved node B (eNB) in LTE or LTE-A, a radio network controller (RNC) in UMTS, a BS controller (BSC) in the GSM/GERAN, an ng-eNB in an Evolved Universal Terrestrial Radio Access (E-UTRA) BS in connection with 5GC, a next generation Node B (gNB) in the 5G-RAN, or any other apparatus capable of controlling radio communication and managing radio resources within a cell. The BS may serve one or more UEs via a radio interface.

The BS is operable to provide radio coverage to a specific geographical area using a plurality of cells forming the RAN. The BS supports the operations of the cells. Each cell is operable to provide services to at least one UE within its radio coverage.

Each cell (often referred to as a serving cell) provides services to serve one or more UEs within its radio coverage such that each cell schedules the DL and optionally UL resources to at least one UE within its radio coverage for DL and optionally UL packet transmissions. The BS may communicate with one or more UEs in the radio communication system via the plurality of cells.

A cell may allocate sidelink (SL) resources for supporting Proximity Service (ProSe) or Vehicle to Everything (V2X) service. Each cell may have overlapped coverage areas with other cells.

In Multi-RAT Dual Connectivity (MR-DC) cases, the primary cell of a Master Cell Group (MCG) or a Secondary Cell Group (SCG) may be called a Special Cell (SpCell). A Primary Cell (PCell) may include the SpCell of an MCG. A Primary SCG Cell (PSCell) may include the SpCell of an SCG. MCG may include a group of serving cells associated with the Master Node (MN), including the SpCell and optionally one or more Secondary Cells (SCells). An SCG may include a group of serving cells associated with the Secondary Node (SN), including the SpCell and optionally one or more SCells.

As discussed above, the frame structure for NR supports flexible configurations for accommodating various next generation (e.g., 5G) communication requirements, such as Enhanced Mobile Broadband (eMBB), Massive Machine Type Communication (mMTC), and Ultra-Reliable and Low-Latency Communication (URLLC), while fulfilling high reliability, high data rate, and low latency requirements. The Orthogonal Frequency-Division Multiplexing (OFDM) technology in the 3GPP may serve as a baseline for an NR waveform. The scalable OFDM numerology, such as adaptive sub-carrier spacing, channel bandwidth, and Cyclic Prefix (CP), may also be used.

Two coding schemes are considered for NR, specifically Low-Density Parity-Check (LDPC) code and Polar Code. The coding scheme adaption may be configured based on channel conditions and/or service applications.

At least DL transmission data, a guard period, and a UL transmission data should be included in a transmission time interval (TTI) of a single NR frame. The respective portions of the DL transmission data, the guard period, and the UL transmission data should also be configurable based on, for example, the network dynamics of NR. SL resources may also be provided in an NR frame to support ProSe services or V2X services.

Any two or more than two of the following paragraphs, (sub)-bullets, points, actions, behaviors, terms, or claims described in the present disclosure may be combined logically, reasonably, and properly to form a specific method.

Any sentence, paragraph, (sub)-bullet, point, action, behaviors, terms, or claims described in the present disclosure may be implemented independently and separately to form a specific method.

Dependency, e.g., "based on", "more specifically", "preferably", "in one embodiment", "in some implementations", etc., in the present disclosure is just one possible example which would not restrict the specific method.

"A and/or B" in the present disclosure may include either A or B, both A and B, at least one of A and B.

Examples of some selected terms in the present disclosure are provided as follows.

**BWP:** A subset of the total cell bandwidth of a cell is referred to as a Bandwidth Part (BWP) and beamwidth part adaptation is achieved by configuring the UE with BWP(s) and indicating to the UE which of the configured BWPs is currently the active BWP. To enable Bandwidth Adaptation (BA) on the PCell, the base station (e.g., a gNB) configures the UE with UL and DL BWP(s). To enable BA on the SCells, in a CA scenario, the gNB configures the UE with DL BWP(s) at least (e.g., there may be none in the UL). It should be noted that even though in this disclosure a gNB is used as an example of a BS, any other type of base station (e.g., eNB, etc.) is equally applicable in the present disclosure. For the PCell, the initial BWP is the BWP used for initial access. For the SCell(s), the initial BWP is the BWP configured for the UE to first operate at an SCell activation. The UE may be configured with a first active uplink BWP by a *firstActiveUplinkBWP* IE. If the first active uplink BWP is configured for an SpCell, the *firstActiveUplinkBWP* IE field contains the ID of the UL BWP to be activated upon performing the RRC (re-)configuration. If the *firstActiveUplinkBWP* IE field is absent, the RRC (re-)configuration does not impose a BWP switching. If the first active uplink BWP is configured for an SCell, the *firstActiveUplinkBWP* IE field contains the ID of the uplink bandwidth part to be used upon the MAC-activation of an SCell.

**PCell:** When CA is configured, the UE only has one RRC connection with the network. At the RRC connection establishment/re-establishment/handover, one serving cell provides the NAS mobility information, and at the RRC connection re-establishment/handover, one serving cell provides the security input. This cell may be referred to as the PCell.

**PUCCH SCell:** When CA is configured, a UE may be configured with a cell other than PCell on which the PUCCH resource is configured. This cell may be referred to as the PUCCH SCell.

**CSI-ReportConfig:** A CSI report configuration. FIG. 1 is a diagram 100 illustrating an example data structure of an IE *CSI-ReportConfig*, according to an example implementation of the present disclosure. It should be noted that the *CSI-ReportConfig* may include other IEs, which are not listed in FIG. 1. The IEs in the *CSI-ReportConfig* may include:

- *Carrier*: This field indicates in which serving cell the *CSI-ResourceConfig* is to be found. If the field is absent, the resources are on the same serving cell that provides the CSI report configuration.
- *codebookConfig*: Codebook configuration for Type-1 or Type-2 that includes a codebook subset restriction. If the field codebookConfig-r16 is present, the UE may ignore the *codebookConfig* field.
- *cqi-Table*: This field indicates which CQI table to be used for the CQI calculation (*see*, e.g., the 3GPP TS 38.214 V17.5.0, clause 5.2.2.1).
- *csi-IM-ResourcesForInterference*: CSI IM resources for interference measurement. *csi-ResourceConfigId* of a *CSI ResourceConfig* may be included in the configuration of the serving cell indicated with the field "carrier" above. The indicated *CSI-ResourceConfig* may only contain the CSI-IM resources. The *bwp-Id* in that *CSI-ResourceConfig* may have the same value as the *bwp-Id* in the *CSI ResourceConfig* indicated by the *resourcesForChannelMeasurement*.
- *nzp-CSI-RS-ResourcesForInterference*: NZP CSI RS resources for interference measurement. *csi-ResourceConfigId* of a *CSI-ResourceConfig* may be included in the configuration of the serving cell indicated with the field "carrier" above. The indicated *CSI-ResourceConfig* may only contain the NZP-CSI-RS resources. The *bwp-Id* in that *CSI-ResourceConfig* may have the same value as the *bwp-Id* in the *CSI-ResourceConfig* indicated by *resourcesForChannelMeasurement.*
- *pucch-CSI-ResourceList*: This field indicates which PUCCH resource to be used for reporting on PUCCH.
- *reportConfigType*: This field indicates the time domain behavior of reporting configuration.
- *reportFreqConfiguration*: This field indicates reporting configuration in the frequency domain (*see*, e.g., the 3GPP TS 38.214 V17.5.0, clause 5.2.1.4).
- *reportQuantity*: The CSI related quantities to report (*see*, e.g., the 3GPP TS 38.214 V17.5.0, clause 5.2.1). If the field *reportQuantity-r16* is present, the UE may ignore the field *reportQuantity.*
- *reportSlotConfig*: Periodicity and slot offset (*see*, e.g., the 3GPP TS 38.214 V17.5.0, clause 5.2.1.4). If the field *reportSlotConfig-v1530* is present, the UE may ignore the value provided in the field *reportSlotConfig.*
- *reportSlotOffsetList*, *reportSlotOffsetListForDCI-Format0-1*, *reportSlotOffsetListForDCI-Format0-2*: Timing offset Y for semi persistent reporting using PUSCH. This field lists the allowed offset values. This list may have the same number of entries as the *pusch-TimeDomainAllocationList* in the *PUSCH-Config.* A particular value may be indicated in DCI. The network indicates, in the DCI field of the UL grant, which of the configured report slot offsets the UE may apply. The DCI field having the value of 0 may correspond to the first report slot offset in this list, the DCI field having the value of 1 may correspond to the second report slot offset in this list, and so on. The first report may be transmitted in slot n+Y, the second report may be transmitted in slot n+Y+P, where P is the configured periodicity. The field *reportSlotOffsetList* may be for DCI format 0_0, the field *reportSlotOffsetListForDCI-Format0-1* may be for DCI format 0_1, and the field *reportSlotOffsetListForDCI-Format0-2* may be for DCI format 0_2, respectively (*see*, e.g., the 3GPP TS 38.214 V17.5.0, clause 6.1.2.1).
- *resourcesForChannelMeasurement*: Resources for channel measurement. *csi-ResourceConfigId* of a *CSI-ResourceConfig* may be included in the configuration of the serving cell indicated with the field "carrier" above. The indicated *CSI-ResourceConfig* may only contain the NZP-CSI-RS resources and/or SSB resources. This *CSI-ReportConfig* may be associated with the DL BWP indicated by *bwp-Id* in that *CSI-ResourceConfig.*

**CSI-AperiodicTriggerState:** FIG. 2 is a diagram 200 illustrating an example data structure of an IE *CSI-AperiodicTriggerState*, according to an example implementation of the present disclosure. It should be noted that the *AperiodicTriggerState* may include other IEs, which are not listed in FIG. 2. The IEs in the *AperiodicTriggerState* may include:

- *csi-IM-ResourcesForInterference*: *CSI-IM-ResourceSet* for interference measurement. Entry number in the *csi-IM-ResourceSetList* in the *CSI ResourceConfig* indicated by the *csi-IM-ResourcesForInterference* in the *CSI-ReportConfig* is indicated by the *reportConfigId* (value 1 corresponds to the first entry, value 2 corresponds to the second entry, and so on). The indicated *CSI-IM-ResourceSet* may have exactly the same number of resources as the *NZP-CSI-RS-ResourceSet* indicated in the *nzp-CSI-RS-ResourcesforChannel.*
- *csi-SSB-ResourceSet*: *CSI-SSB-ResourceSet* for channel measurements. Entry number in the *csi-SSB-ResourceSetList* in the *CSI ResourceConfig* may be indicated by the *resourcesForChannelMeasurement* in the *CSI-ReportConfig* indicated by the *reportConfigId* (value 1 corresponds to the first entry, value 2 corresponds to the second entry, and so on).

- *nzp-CSI-RS-ResourcesForInterference*: *NZP-CSI-RS-ResourceSet* for interference measurement. Entry number in the *nzp-CSI-RS-ResourceSetList* in the *CSI-ResourceConfig* may be indicated by *nzp-CSI-RS-ResourcesFor-Interference* in the *CSI-ReportConfig* indicated by the *reportConfigId* (value 1 corresponds to the first entry, value 2 corresponds to the second entry, and so on).
- *qcl-info*: List of references to TCI-States for providing the QCL source and QCL type for each NZP-CSI-RS-Resource listed in the *nzp-CSI-RS-Resources* of the *NZP-CSI-RS-ResourceSet* indicated by the *nzp-CSI-RS-Resourcesfor-Channel.* Each *TCI-StateId* refers to the TCI-State which has this value for *tci-StateId* and is defined in the *tci-StatesToAddModList* in the PDSCH-Config included in the BWP-Downlink corresponding to the serving cell and to the DL BWP to which the *resourcesForChannelMeasurement* (in the *CSI-ReportConfig* indicated by *reportConfigId*) belongs. The first entry in the *qcl-info-forChannel* may correspond to the first entry in the *nzp-CSI-RS-Resources* of that NZP-CSI-RS-ResourceSet, the second entry in the *qcl-info-forChannel* may correspond to the second entry in the *nzp-CSI-RS-Resources*, and so on (*see*, e.g., the 3GPP TS 38.214 V17.5.0, clause 5.2.1.5.1)
- *reportConfigId*: The *reportConfigId* of one of the *CSI-ReportConfigToAddMod* configured in the *CSI-MeasConfig.*
- *resourceSet*: NZP-CSI-RS-ResourceSet for channel measurements. Entry number in the *nzp-CSI-RS-Resource-SetList* in the *CSI-ResourceConfig* may be indicated by the *resourcesForChannelMeasurement* in the *CSI-Report-Config* indicated by the *reportConfigId* (value 1 corresponds to the first entry, value 2 corresponds to the second entry, and so on).

Network energy saving is of great importance in the field to reduce the environmental impacts (e.g. greenhouse gas emissions). The environmental impact of the 5G networks needs to stay under control, and solutions to improve network energy savings need to be developed.

In the NR system, according to legacy DL MIMO procedures, the adaptation of spatial elements may be achieved by the RRC (re-)configurations updating, such as the CSI-RS (re-)configurations, in a semi-static manner to reduce the overall energy consumption of the network.

Moreover, to enhance the current CSI framework during measuring and reporting, an issue may be raised as how to efficiently adapt the spatial pattern to support the network energy saving.

**CSI framework**

The time and frequency resources that may be used by the UE to report CSI are controlled by the gNB. The CSI may include Channel Quality Indicator (CQI), precoding matrix indicator (PMI), CSI-RS resource indicator (CRI), SS/PBCH Block Resource indicator (SSBRI), layer indicator (LI), rank indicator (RI), L1-RSRP, or L1-SINR.

For the CQI, PMI, CRI, SSBRI, LI, RI, L1-RSRP, the UE may be configured, for example, by higher layers, with $N \geq 1$ *CSI-ReportConfig* Reporting Settings (N is the number of Reporting Settings), $M \geq 1$ *CSI-ResourceConfig* Resource Settings (M is the number of Resource Settings), and one or two lists of trigger states (e.g., given by the higher layer parameters *CSI-AperiodicTriggerStateList* and *CSI-SemiPersistentOnPUSCH-TriggerStateList*).

Each trigger state in the *CSI-AperiodicTriggerStateList* may include a list of associated *CSI-ReportConfigs* indicating the Resource Set IDs for channel and optionally for interference. Each trigger state in the *CSI-SemiPersistentOnPUSCH-TriggerStateList* may include one associated *CSI-ReportConfig.*

Each Reporting Setting *CSI-ReportConfig* may be associated with a single downlink BWP (e.g., indicated by a higher layer parameter, such as the *BWP-Id*) given in the associated *CSI ResourceConfig* for channel measurement and may contain the parameter(s) for a CSI reporting band, such as the codebook configuration including codebook subset restriction, time-domain behavior, frequency granularity for CQI and PMI, measurement restriction configurations, and the CSI-related quantities to be reported by the UE such as the LI, L1-RSRP, L1-SINR, CRI, and SSBRI.

Each CSI Resource Setting *CSI-ResourceConfig* may include a configuration of a list of $S \geq 1$ CSI Resource Sets (e.g., given by higher layer parameter *csi-RS-ResourceSetList*, and S being the number of Resource sets), where the list may include references to at least one of NZP CSI-RS resource set(s) and SS/PBCH block set(s), or the list may include references to the CSI-IM resource set(s). Each CSI Resource Setting may be located in the DL BWP identified by the higher layer parameter *BWP-id*, and all CSI Resource Settings linked to a CSI Report Setting may have the same DL BWP.

**Aperiodic CSI (A-CSI) triggering method**

A trigger state may be initiated using the CSI request field in the DCI.

- When all the bits of the CSI request field in the DCI are set to zero, no CSI is requested.
- When the number of configured CSI triggering states in the *CSI-AperiodicTriggerStateList* is greater than $2^{NTS}$ - 1, where $N_{TS}$ is the number of bits in the DCI CSI request field, the UE may receive a subselection indication, e.g., as described in clause 6.1.3.13 of the 3GPP TS 38.321 V17.4.0, used to map up to $2^{NTS}$ - 1 trigger states to the codepoints of the CSI request field in the DCI. $N_{TS}$ may be configured by the higher layer parameter *reportTriggerSize*.

- When the number of CSI triggering states in *CSI-AperiodicTriggerStateList* is less than or equal to $2^{NTS}$ - 1, the CSI request field in the DCI may directly indicate the triggering state.

When the aperiodic CSI-RS is used with aperiodic reporting, the CSI-RS offset may be configured per resource set by the higher layer parameter *aperiodicTriggeringOffset*, including the case that the UE is not configured with a *minimumSchedulingOffset* for any DL or UL BWP and all the associated trigger states do not have the higher layer parameter qcl-Type set to 'QCL-TypeD' in the corresponding TCI states. The CSI-RS triggering offset may have the values of {0, 1, 2, 3, 4, 16, 24} slots. If the UE is not configured with the *minimumSchedulingOffset* for any DL or UL BWP and if all the associated trigger states do not have the higher layer parameter qcl-Type set to 'QCL-TypeD' in the corresponding TCI states, the CSI-RS triggering offset may be fixed to zero. The aperiodic triggering offset of the CSI-IM may follow offset of the associated NZP CSI-RS for channel measurement.

The PUSCH resource for A-CSI may be indicated by the DCI triggering the A-CSI. The PRBs for the PUSCH may be indicated in the frequency domain resource assignment (FDRA) field of the DCI and the symbols for the PUSCH may be indicated by the time domain resource assignment (TDRA) field of the DCI. The UL-SCH indicator field in the DCI indicates whether the A-CSI is multiplexed with the UL-SCH. When the UL-SCH indicator field is set to '1', A-CSI may be multiplexed with UL-SCH, and the number of REs for the A-CSI may be calculated, e.g., as specified in the 3GPP TS 38.212 V17.5.0, and the slot $n+K_2$ in which the PUSCH is transmitted may be determined by the entry for $K_2$ value in the row of the TDRA table, which is indicated by the TDRA field of the DCI transmitted in slot *n*. Otherwise, when the UL-SCH indicator field is set to '0', A-CSI may be mapped on the REs allocated for the PUSCH, and the slot in which the PUSCH is transmitted may be determined by the TDRA field value *m* of the DCI transmitted in slot n, and the $K_2$ value may be determined as $K_2 = \max_j Y_j(m+1)$, where $Y_j, j = 0, \ldots, N_{Rep} - 1$ are the corresponding list entries of the higher layer parameter *reportSlotOffsetList* in the *CSI-ReportConfig* for the $N_{Rep}$ triggered CSI Reporting Settings and $Y_j(m+1)$ is the $(m+1)^{th}$ entry of $Y_j$.

- The slot where the UE may transmit the PUSCH is determined by $K_2$ as $\left\lfloor n \cdot \frac{2^{\mu_{PUSCH}}}{2^{\mu_{PDCCH}}} \right\rfloor + K_2$, where *n* is the slot with the scheduling DCI, $K_2$ is based on the numerology of PUSCH, and $\mu_{PUSCH}$ and $\mu_{PDCCH}$ are the subcarrier spacing configurations for the PUSCH and PDCCH, respectively,

To enable the mechanism of spatial domain adaptation for network energy saving, the association between the spatial patterns and network parameters may be specified. With the associations, the UEs may measure the CSI and report to the network according to the spatial adaptation. The mechanism of legacy CSI framework may not be efficient. New mechanisms of spatial adaptation are proposed in this disclosure. For further enhancement, the overhead reduction of measurement and report may be needed for the spatial adaptation. Some impacts of adaptation to other reporting mechanisms may also be evaluated.

**Spatial Pattern**

For spatial element adaptation, the realization of the adapted parameters and contents for the indication/configuration may be needed, e.g., for representing a spatial pattern with respect to the indicated antenna ports and/or the number of antenna elements, codebooks, and/or beams.

In some implementations, the parameter (e.g. ports) corresponding to the spatial pattern may be carried in the RRC signaling, MAC CE, or via DCI signaling.

The spatial pattern may be defined as a possible layout of a CSI antenna port array or a subset of antenna ports. Table 1 below illustrates example spatial patterns, each of which being associated with the number of CSI-RS antenna ports and a pair of ($N_1$, $N_2$), where $N_1$ is the number of antenna elements in the first dimension and $N_2$ is the number of antenna elements in the second dimension.

**Table 1**

| The number of CSI-RS antenna ports, $P_{CSI-RS}$ | ($N_1$, $N_2$) |
|---|---|
| 4 | (2, 1) |

(continued)

| The number of CSI-RS antenna ports, $P_{CSI-RS}$ | $(N_1, N_2)$ |
|---|---|
| 8 | (2, 2) |
| | (4, 1) |
| 12 | (3, 2) |
| | (6, 1) |
| 16 | (4, 2) |
| | (8, 1) |
| 24 | (4, 3) |
| | (6, 2) |
| | (12, 1) |
| 32 | (4, 4) |
| | (8, 2) |
| | (16, 1) |

FIG. 3 is a diagram 300 illustrating a table listing association between a pair of $(N_1, N_2)$ and layout of CSI antenna port array, according to an example implementation of the present disclosure. Each row in the table that corresponds to a CSI antenna port array may represent a spatial pattern.

In some implementations, a spatial pattern may be associated with a TxRU on-off scheme layout pattern. FIG. 4 is a diagram 400 illustrating association between a spatial pattern and a TxRU on-off scheme layout pattern, according to an example implementation of the present disclosure. The spatial pattern may be changed by turning on a subset of TxRUs and turning off the remaining TxRUs. The spatial pattern shown in FIG. 4 may correspond to turning on a subset including {TxRU1, TxRU2, TxRU4} and turning off the remaining TxRUs, including TxRU3.

In some implementations, a spatial pattern may be associated with an antenna beam pattern. FIG. 5 is a diagram 500 illustrating association between a spatial pattern and an antenna beam pattern, according to an example implementation of the present disclosure. For example, spatial pattern #1 corresponds to beam pattern #1 and spatial pattern #2 corresponds to beam pattern #2.

**Association between the CSI resource and the spatial pattern**

In some implementations, a CSI resource may be associated with one or more spatial patterns. The spatial pattern may be seen as a group of antenna ports and the association may be used to indicate whether the patterns are active or inactive.

FIG. 6 is a diagram 600 illustrating one-to-one mapping between a CSI-RS resource and a spatial pattern, according to an example implementation of the present disclosure. In FIG. 6, each gray shaded rectangle corresponds to a CSI-RS resource. A slash "/" or a backslash "\" in FIG. 6 may indicate a logical antenna port. The slash "/" and the backslash "\" may stand for two polarization of antenna ports. N1 and N2 may indicate the dimension of the layout of antenna ports. It is assumed that the maximum number of antenna ports that may be activated by the gNB is 32. A slash "/" or a backslash "\" shown in dotted lines represents a deactivated antenna port, whereas a slash "/" or a backslash "\" shown in solid lines represents an activated antenna port.

Three CSI-RS resources are shown in FIG. 6, as three different Cases 1-3. Case 1 corresponds to a first CSI-RS resource. The first CSI-RS resource includes the upper most 16 resource elements for transmitting the CSI-RS with a first layout of antenna ports, where the first layout of antenna ports corresponds to $(N_1, N_2)$ = (4,2). Case 2 corresponds to a second CSI-RS resource. The second CSI-RS resource includes the 16 resource elements in the middle for transmitting the CSI-RS with a second layout of antenna ports, where the second layout of antenna ports corresponds to $(N_1, N_2)$ = (4,2). Case 3 corresponds to a third CSI-RS resource. The third CSI-RS resource includes the lower most 16 resource elements for transmitting the CSI-RS with a third layout of antenna ports, where the third layout of antenna ports corresponds to $(N_1, N_2)$ = (8,1).

For Case 1, the left part of antenna ports is activated, and the right part of antenna ports is deactivated. For Case 2, the left part of antenna ports is deactivated, and the right part of antenna ports is activated. For Case 3, the upper part of antenna ports is activated, and the lower part of antenna ports is deactivated.

Case 1 to Case 3 may be an implementation of the CDM4 in the 3GPP TS 38.211 V17.4.0 - Table 7.4.1.5.3-1. The mapping between the CSI-RS resource and the spatial pattern may be one-to-one, as illustrated in FIG. 6.

In some implementations, the association between the CSI-RS resources and the spatial pattern may be configurable by RRC signaling.

The resource allocation may be limited if there are multiple spatial patterns configured to be reported for the one-to-one mapping.

FIG. 7 is a diagram 700 illustrating one-to-many mapping between a CSI-RS resource and spatial patterns, according to an example implementation of the present disclosure. Each CSI-RS resource may be associated with one or more spatial patterns. In FIG. 7, it is assumed that the maximum number of antenna ports that may be activated by the gNB is 32, where a slash "/" or a backslash "\" shown in dotted lines represents a deactivated antenna port, whereas a slash "/" or a backslash "\" shown in solid lines represents an activated antenna port.

In FIG. 7, one CSI-RS resource is shown, and three spatial patterns are associated with the CSI-RS resource. Case 1 corresponds to a first layout of antenna ports. The CSI-RS resource includes the uppermost 16 resource elements for transmitting the CSI-RS with the first layout of antenna ports, where the first layout of antenna ports corresponds to ($N_1$, $N_2$) = (4,2). Case 2 corresponds to a second layout of antenna ports. The CSI-RS resource includes the uppermost 16 resource elements for transmitting the CSI-RS with the second layout of antenna ports, where the second layout of antenna ports corresponds to ($N_1$, $N_2$) = (4,2). Case 3 corresponds to a third layout of antenna ports. The CSI-RS resource includes the uppermost 16 resource elements for transmitting the CSI-RS with the third layout of antenna ports, where the third layout of antenna ports corresponds to ($N_1$, $N_2$) = (8,1). For Case 1, the left part of antenna ports is activated and the right part of antenna ports is deactivated. For Case 2, the left part of antenna ports is deactivated, and the right part of antenna ports is activated. For Case 3, the upper part of antenna ports is activated, and the lower part of antenna ports is deactivated.

Case 1 to Case 3 may be an implementation of the CDM4 in the 3GPP TS 38.211 V17.4.0 - Table 7.4.1.5.3-1. The mapping between the CSI-RS resource and the spatial patterns may be one to many, as illustrated in FIG. 7. There may be additional signaling for indicating the port array with the same CSI-RS resource. For example, signaling may be required to indicate the timing of different transmission instances of the same CSI-RS resource associated with different spatial patterns. A method for associating the transmission instances of the same CSI-RS resource to the spatial patterns may also be needed.

## Association between the CSI report and the spatial pattern

A CSI report may be associated with one or more spatial patterns. The spatial pattern may be seen as a group of antenna ports and the association may be used to indicate the patterns to be, or not to be, reported.

In some implementations, for the aperiodic CSI reporting, a CSI report configuration indicated by the *CSI-ReportConfigId* may be associated with one spatial pattern. The *CSI-ReportConfig* may be found in the 3GPP TS 38.331 V17.4.0. An example of the *CSI-ReportConfig* may be found in FIG. 1.

FIG. 8 is a diagram 800 illustrating an example data structure of an IE *CSI-AperiodicTriggerState*, according to an example implementation of the present disclosure. It should be noted that the *CSI-AperiodicTriggerState* may include other IEs, which are not listed in FIG. 8. Compared with the IE *CSI-AperiodicTriggerState*, as illustrated in FIG. 2, a new IE *Pattern ID* associated with the pattern to be reported may be introduced and added in the *CSI-ReportConfig.* The *Pattern ID* may be used to indicate a specific spatial pattern from the one or more spatial patterns associated with the CSI-RS resource that is associated with the *CSI-ReportConfig* (e.g., configured via the *resourceForChannelMeasurement* in the *CSI-ReportConfig*).

In some implementations, the new IE *pattern ID* may be added in the *CSI-ResourceConfig.* The *CSI-ResourceConfig* may be found in the 3GPP TS 38.331 V17.4.0.

In some implementations, for aperiodic CSI reporting, a CSI report configuration may include multiple CSI report sub-configurations. A new IE *CSI-ReportSubConfig* in a CSI report configuration may be introduced and associated with one spatial pattern. The content of *CSI-ReportSubConfig* may include at least (part of)/any combinations of the content of the *CSI-ReportConfig.* The *CSI-ReportConfig* may be found in the 3GPP TS 38.331 V17.4.0. For example, different CSI-RS resources or different spatial patterns of a CSI-RS resource may be configured by the different *CSI-ReportSubConfig*, e.g., via the *resourceForChannelMeasurement* in the different *CSI-ReportSubConfig.*

FIG. 9 is a diagram 900 illustrating an example data structure of an IE *CSI-AperiodicTriggerState*, according to an example implementation of the present disclosure. It should be noted that the *CSI-AperiodicTriggerState* may include other IEs, which are not listed in FIG. 9. A new IE *ReportSubConfigID* may be introduced. The *ReportSubConfigID* may be associated with a pattern ID. For example, the pattern ID #1 and the pattern ID #2 may correspond to the spatial patterns of the same CSI-RS resource for a one-to-many CSI-RS resource and pattern mapping. The *ReportSubConfigID* #1 may be the report configuration of pattern ID #1 and the *ReportSubConfigID* #2 may be the report configuration of pattern ID #2.

In some implementations, a CSI report configuration ID may be associated with one or more CSI report sub-configuration IDs. For example, a CSI report configuration may include L CSI report sub-configurations, where L is a positive integer. The IE *CSI-AperiodicTriggerState* 900 may be associated with N report sub-configuration IDs (e.g., the IE *ReportSubConfigID* in FIG. 9), where N is a positive integer less than or equal to L. For example, the N report sub-configuration IDs in the IE *CSI-AperiodicTriggerState* may be selected from the L CSI report sub-configurations in the CSI report configuration.

A new IE *maxNrofReportSubConfig* may indicate the maximum number of sub-configurations in a *CSI-Report-Config* and may be added in the *CSI-ReportConfig.* In some implementations, the UE may also report to the BS the maximum number of CSI-RS sub-configurations that the UE supports (e.g., via the *UEAssistanceInformation* delivery or UE capability enquiry procedure). In some implementations, the maximum number of the (CSI-RS report) sub-configurations may be pre-defined in the 3GPP TS.

**Maximum number of reports per BWP**

The maximum number of CSI reports for CSI per BWP may be in a configuration, for example, described in the 3GPP TS 38.306 V17.4.0. For the spatial adaptation of network energy saving, the number of adaptations may be high, and the corresponding number of reports may also be considerable. If the number of intended adaptations exceeds the maximum number of CSI reports per BWP, one or more mechanisms may be needed to solve the issue.

The IE *maxNumberAperiodicCSI-PerBWP-ForCSI-Report* in the 3GPP TS 38.306 V17.4.0 may indicate the maximum number of aperiodic CSI reports for the CSI per (DL/UL/SL) BWP. The candidate values may be {1, 2, 3, 4}. The value may not be sufficient to support multiple CSI reports for an NES spatial adaptation report.

In some implementations, the candidate values of the maximum value may be expanded to a higher value.

In some implementations, multiple reports in one report or joint report may be introduced to overcome the limitations.

**How to efficiently adapt the spatial pattern for network energy saving**

If the adaptation requires a frequent per-UE RRC reconfiguration, a huge amount of signaling and energy overhead may be induced. Generation of the CSI sequence of the legacy RRC method may also be energy consuming. The CSI-RS sequence generation may be described in the 3GPP TS 38.211 V17.4.0, clause 7.4.1.5.2.

The pseudo-random sequence generator may be initialized with

$$c_{\mathrm{init}} = \left(2^{10}\left(N_{\mathrm{symb}}^{\mathrm{slot}} n_{\mathrm{s,f}}^{\mu} + l + 1\right)(2n_{\mathrm{ID}} + 1) + n_{\mathrm{ID}}\right) \mathrm{mod} 2^{31}$$

at the start of each OFDM symbol, where $n_{\mathrm{s,f}}^{\mu}$ is the slot number within a radio frame, $N_{\mathrm{symb}}^{\mathrm{slot}}$ is the OFDM symbol number within a slot, and $n_{\mathrm{ID}}$ equals the higher-layer parameter *scramblingID* or *sequenceGenerationConfig.* For the legacy CSI framework, the RRC reconfiguration may induce the regeneration of reference signal for different parameters, which may be energy consuming.

Efficient adaptation may be an adaptation that maximizes the NES gain and, at the same time, guarantees negligible performance loss with respect to the baseline schemes. As such, a dynamic adaptation (e.g., having different number of Ports/TxRUs and/or different DL powers per UE) may be as the answer for having an efficient adaptation in the present disclosure.

**- Efficient structure of CSI-RS resource and pattern**

The reduced CSI-RS resource associated with a CSI-RS antenna configuration in a CSI report setting may be a subset of the CSI-RS resources with all antenna ports being active.

The efficient structure of CSI-RS resources may be for the same CDM group in Table 7.4.1.5.3-1 in the 3GPP TS 38.211 V17.4.0 where the corresponding antenna ports layout are feasible. Table 2 below is a reproduction of the Table 7.4.1.5.3-1 in the 3GPP TS 38.211 V17.4.0.

**Table 2**

| Row | Ports $X$ | Density $\rho$ | CDM-Type | $(\bar{k},\bar{l})$ | CDM group index $j$ | $k'$ | $l'$ |
|---|---|---|---|---|---|---|---|
| 1 | 1 | 3 | No CDM | $(k_0,l_0)$, $(k_0+4,l_0)$, $(k_0+8,l_0)$ | 0, 0, 0 | 0 | 0 |
| 2 | 1 | 1, 0.5 | No CDM | $(k_0,l_0)$ | 0 | 0 | 0 |
| 3 | 2 | 1,0.5 | FD-CDM2 | $(k_0,l_0)$ | 0 | 0, 1 | 0 |
| 4 | 4 | 1 | FD-CDM2 | $(k_0,l_0)$, $(k_0+2,l_0)$ | 0, 1 | 0, 1 | 0 |
| 5 | 4 | 1 | FD-CDM2 | $(k_0,l_0)$, $(k_0,l_0+1)$ | 0, 1 | 0, 1 | 0 |
| 6 | 8 | 1 | FD-CDM2 | $(k_0,l_0)$, $(k_1,l_0)$, $(k_2,l_0)$, $(k_3,l_0)$ | 0, 1, 2, 3 | 0, 1 | 0 |
| 7 | 8 | 1 | FD-CDM2 | $(k_0,l_0)$, $(k_1,l_0)$, $(k_0,l_0+1)$, $(k_1,l_0+1)$ | 0, 1, 2, 3 | 0, 1 | 0 |
| 8 | 8 | 1 | CDM4-(FD2, TD2) | $(k_0,l_0)$, $(k_1,l_0)$ | 0, 1 | 0, 1 | 0, 1 |
| 9 | 12 | 1 | FD-CDM2 | $(k_0,l_0)$, $k_1,l_0)$, $(k_2,l_0)$, $(k_3,l_0)$, $k_4,l_0)$, $(k_5,l_0)$ | 0, 1, 2, 3, 4, 5 | 0, 1 | 0 |
| 10 | 12 | 1 | CDM4-(FD2, TD2) | $(k_0,l_0)$, $(k_1,l_0)$, $(k_2,l_0)$ | 0, 1, 2 | 0, 1 | 0, 1 |
| 11 | 16 | 1,0.5 | FD-CDM2 | $(k_0,l_0)$, $(k_1,l_0)$, $(k_2,l_0)$, $(k_3,l_0)$, $(k_0,l_0+1)$, $(k_1,l_0+1)$, $(k_2,l_0+1)$, $(k_3,l_0+1)$ | 0, 1, 2, 3, 4, 5, 6, 7 | 0, 1 | 0 |
| 12 | 16 | 1, 0.5 | CDM4-(FD2, TD2) | $(k_0,l_0)$, $(k_1,l_0)$, $(k_2,l_0)$, $(k_3,l_0)$ | 0, 1, 2, 3 | 0, 1 | 0, 1 |
| 13 | 24 | 1,0.5 | FD-CDM2 | $(k_0,l_0)$, $(k_0,l_0)$, $(k_2,l_0)$, $(k_0,l_0+1)$, $(k_1,l_0+1)$, $(k_2,l_0+1)$, $(k_0,l_1)$, $(k_1,l_1)$, $(k_2,l_1)$, $(k_0,l_1+1)$, $(k_1,l_1+1)$, $(k_2,l_1+1)$ | 0, 1, 2, 3 4, 5, 6, 7, 8, 9, 10, 11 | 0, 1 | 0 |
| 14 | 24 | 1, 0.5 | CDM4-(FD2, TD2) | $(k_0,l_0)$, $(k_1,l_0)$, $(k_2,l_0)$, $(k_0,l_1)$, $(k_1,l_1)$, $(k_2,l_1)$ | 0, 1, 2, 3, 4, 5 | 0, 1 | 0, 1 |
| 15 | 24 | 1, 0.5 | CDM8-(FD2, TD4) | $(k_0,l_0)$, $(k_0,l_0)$, $(k_2,l_0)$ | 0, 1, 2 | 0, 1 | 0, 1, 2, 3 |
| 16 | 32 | 1,0.5 | FD-CDM2 | $(k_0,l_0)$, $(k_1,l_0)$, $(k_2,l_0)$, $(k_3,l_0)$,$(k_0,l_0+1)$, $(k_1,l_0+1)$, $(k_2,l_0+1)$, $(k_3,l_0+1)$, $(k_0,l_1)$, $(k_1,l_1)$, $(k_2,l_1)$, $(k_3,l_1$, $(k_0,l_1+1)$, $(k_1,l_1+1)$, $(k_2,l_1+1)$, $(k_3,l_1+1)$ | 0, 1, 2, 3, 4, 5, 6, 7, 8, 9, 10, 11, 12, 13, 14, 15 | 0, 1 | 0 |
| 17 | 32 | 1, 0.5 | CDM4-(FD2, TD2) | $(k_0,l_0)$, $(k_1,l_0)$, $(k_2,l_0)$, $(k_3,l_0)$, $(k_0,l_1)$, $(k_1,l_1)$, $(k_2,l_1)$, $(k_3,l_1)$ | 0, 1, 2, 3, 4, 5, 6, 7 | 0, 1 | 0, 1 |
| 18 | 32 | 1, 0.5 | CDM8-(FD2, TD4) | $(k_0,l_0)$, $(k_1,l_0)$, $(k_2,l_0)$, $(k_3,l_0)$ | 0, 1, 2, 3 | 0,1 | 0,1, 2, 3 |

The reduced CSI-RS resource pattern may be one of the patterns provided in Table 2 and the antenna array corresponding to the reduced CSI-RS resource pattern may be a uniform linear array (e.g., which is the assumption for a codebook design) with supported configuration provided in Table 5.2.2.2.1-2 and Table 5.2.2.2.2-1 of the 3GPP TS 38.214 V17.5.0 for Type-I single panel and Type-I multi-panel, respectively.

FIG. 10 is a diagram 1000 illustrating an infeasible subset of CSI-RS ports, according to an example implementation of the present disclosure. The 12-port CSI-RS resources in row 10 (e.g., the row index shown in Table 2) with CDM4 may not be a feasible subset of 32-port CSI-RS resources in row 17 with CDM4, since one polarization may not be usable.

In some implementations, the CSI-RS resources with the same CDM group may be sufficient to construct the CSI-RS resource and pattern. For example, for a CSI-RS resource defined based on row 16, the spatial pattern may be adapted with subsets of CSI-RS ports of the CSI-RS resource (e.g., the subsets of CSI-RS ports may be defined based on row 13, row 7, and row 5). A spatial pattern may be associated with a Pattern ID. For example, for a CSI-RS resource defined based on row 16, Pattern ID #1 may be associated with full CSI-RS ports defined based on row 16, Pattern ID #2 may be associated with a subset of CSI-RS ports defined based on row 13, Pattern ID #3 may be associated with a subset of CSI-RS ports defined based on row 7, Pattern ID #4 may be associated with a subset of CSI-RS ports defined based on row 5. In some implementations, a subset of CSI-RS ports may be defined by a separate set of parameters, where the set of parameters may include at least one of the *frequencyDomainAllocation,* the *firstOFDMSymbolInTimeDomain*, the *firstOFDMSymbolInTimeDomain2*, the *nrofPorts*, and the *cdm-Type.*

In some implementations, a subset of CSI-RS ports may be determined by a mask in the frequency domain (e.g., the subcarrier domain) and/or a mask in the time domain (e.g., OFDM symbol domain).

In some implementations, a subset of antenna ports may be indicated by a port indicator. The subset of antenna ports may correspond to the IE Pattern ID, as described above. In some implementations, the port indicator may include a bitmap having a length equal to the number of antenna ports of a CSI-RS resource configured in a CSI-RS resource set configuration.

In some implementations, the mask in the frequency domain may be a higher layer (e.g., RRC) parameter. In some implementations, the mask in the frequency domain may be part of a CSI report sub-configuration. In some implementations, the mask in the frequency domain may be part of a CSI resource (mapping) configuration.

In some implementations, the mask in the frequency domain may indicate a subset of the frequency domain locations or subcarrier locations, where the frequency domain locations or subcarrier locations may be indicated by the parameter *frequencyDomainAllocation.*

In some implementations, the mask in the frequency domain may be a bitmap. The bit width of the mask in the frequency domain may be the number of bits having the value '1' of the parameter *frequencyDomainAllocation.* Bit ' 1' in the mask in the frequency domain may indicate that this subset of CSI-RS ports includes the CDM group(s) at the corresponding subcarrier location. Bit '0' in the mask in the frequency domain may indicate that this subset of CSI-RS ports does not includes the CDM group(s) at the corresponding subcarrier location.

In some implementations, the first LSB (the rightmost bit)/MSB (the leftmost bit) of the mask in the frequency domain may correspond to the first subcarrier location occupied by the CSI-RS resources within a resource block, and the second LSB/MSB of the mask in the frequency domain, if any, may correspond to the second subcarrier location occupied by the CSI-RS resources within a resource block, and so on.

In some implementations, the mask in the time domain may be a higher layer (e.g., RRC) parameter. In some implementations, the mask in the time domain may be part of a CSI report sub-configuration. In some implementations, the mask in the time domain may be part of a CSI resource (mapping) configuration.

In some implementations, the mask in the time domain may indicate a subset of the time domain locations or OFDM symbol locations, where the time domain locations or OFDM symbol locations may be indicated by the parameter(s) *firstOFDMSymbolInTimeDomain* (and *firstOFDMSymbolInTimeDomain2*).

In some implementations, the mask in the time domain may be a bitmap. The bit width of the mask in the time domain may be 1 or 2 bits if the *firstOFDMSymbolInTimeDomain* is configured and the *firstOFDMSymbolInTimeDomain2* is not configured. The bit width of the mask in the time domain may be 2 or 4 bits if both the *firstOFDMSymbolInTimeDomain* and the *firstOFDMSymbolInTimeDomain2* are configured. Bit ' 1' in the mask in the time domain may indicate that this subset of CSI-RS ports includes the CDM group(s) at the corresponding OFDM symbol location. Bit '0' in the mask in the time domain may indicate that this subset of CSI-RS ports does not include the CDM group(s) at the corresponding OFDM symbol location.

When the *firstOFDMSymbolInTimeDomain* is configured and the *firstOFDMSymbolInTimeDomain2* is not configured, the bit width of the mask in the time domain may be 1 bit if any of the rows 3, 4, 6, 8, 9, 10, 12, 15 or 18 in Table 2 is used, and the bit width of the mask in the time domain may be 2 bits if any of the rows 5, 7 or 11 in Table 2 is used.

When the *firstOFDMSymbolInTimeDomain* is configured and the *firstOFDMSymbolInTimeDomain2* is configured, the bit width of the mask in the time domain may be 2 bits if any of the rows 13, 14 or 17 in Table 2 is used, and the bit width of the mask in the time domain may be 4 bits if row 16 in Table 2 is used.

In some implementations, the first LSB/MSB of the mask in the time domain may correspond to the first OFDM symbol occupied by the CSI-RS resources within a slot, and the second LSB /MSB of the mask in the time domain, if any, may correspond to the second OFDM symbol occupied by the CSI-RS resources within a slot, and so on.

In a case that the CSI-RS resource is defined based on the row 16 in Table 2, the parameter *frequencyDomainAllocation* may be a 6-bit bitmap, where four bits may be configured as '1' and two bits may be configured as '0'. FIG. 11A is a diagram 1100A illustrating a time-frequency resource allocation within a resource block corresponding to the *frequencyDomainAllocation* = '011011', according to an example implementation of the present disclosure. The pattern illustrated in FIG. 11A may be referred to as Pattern 1.

In some implementations, the first/second/third/fourth LSB of the mask in the frequency domain may correspond to the first/second/third/fourth subcarrier location occupied by the CSI-RS resources within a slot. In some implementations, the first/second/third/fourth LSB of the mask in the time domain may correspond to the first/second/third/fourth OFDM symbol occupied by the CSI-RS resources within a slot.

FIG. 11B is a diagram 1100B illustrating a time-frequency resource allocation within a resource block corresponding to a mask in the frequency domain = '0111' and a mask in the time domain = '1111', according to an example implementation of the present disclosure. The pattern illustrated in FIG. 11B may be referred to as Pattern 2.

FIG. 11C is a diagram 1100C illustrating a time-frequency resource allocation within a resource block corresponding to a mask in the frequency domain = '0010' and a mask in the time domain = '1111', according to an example implementation of the present disclosure. The pattern illustrated in FIG. 11C may be referred to as Pattern 3.

FIG. 11D is a diagram 1100D illustrating a time-frequency resource allocation within a resource block corresponding to a mask in the frequency domain = '0001' and a mask in the time domain = '000 1', according to an example implementation of the present disclosure. The pattern illustrated in FIG. 11D may be referred to as Pattern 4.

In some implementations, one or more combinations of a mask in the frequency domain and a mask in the time domain may be used to determine/define a subset of CSI-RS ports. FIG. 11E is a diagram 1100E illustrating time-frequency resource allocation within a resource block corresponding to a combination of masks used in FIG. 11C and masks used in FIG. 11D, according to an example implementation of the present disclosure. For example, a combination of masks used for Pattern 3 in FIG. 11C (mask in the frequency domain = '0010', mask in the time domain = '1111') and a combination of masks used for Pattern 4 in FIG. 11D (mask in the frequency domain = '0001', mask in the time domain = '0001') may be used together to define a new subset of the CSI-RS ports.

- **Mechanism enhancement**

If the adaptation requires a frequent RRC reconfiguration, considerable amount of signaling and energy overhead may be induced. A new CSI configuration and report mechanism is introduced in this disclosure.

FIG. 12 is a diagram 1200 illustrating a procedure for a dynamic indication of spatial patterns, according to an example implementation of the present disclosure. For aperiodic CSI measurement and report, the spatial patterns of each report may be established and pre-configured by the network. In action 1212, the BS 1202 may pre-configure multiple spatial patterns to the UE 1204. After the network (e.g. the BS 1202) pre-configures the CSI pattern configuration, there may be some channel condition/throughput change in the network. A DCI indicator may be used as a dynamic indication of the spatial pattern to be reported. In action 1214, the BS 1202 may transmit, to the UE 1204, the DCI for indicating selected spatial patterns for the CSI report. For example, the spatial patterns in the DCI, in action 1214, may be selected from the pre-configured spatial patterns in action 1212. Based on the spatial patterns indicated in the DCI, in action 1216, the UE 1204 may transmit a measurement report to the BS 1202.

The field CSI Request in the DCI format 0_1 or DCI format 0_2 may specify the index of Aperiodic Trigger State configured in the *CSI-AeriodicTriggerStateList* or codepoint defined in the MAC CE.

A new field CSI Pattern Request in the DCI format 0_1 or DCI format 0_2 may be introduced. The new field CSI Pattern Request may indicate the sub-config in the report. Table 3 below illustrates a mapping between the field CSI Pattern Request and the pattern in the sub-config to be reported using an index, according to an example implementation of the present disclosure.

**Table 3**

| Index | Pattern Selected |
|---|---|
| 0 | No pattern |
| 1 | 1 |
| 2 | 2 |
| 3 | 1, 2 |

When the value of the CSI pattern request in the DCI is set to zero, no CSI spatial pattern is requested. When the value of the CSI pattern request in the DCI is set to 1, CSI spatial pattern 1 may be requested. When the value of the CSI pattern request in the DCI is set to 2, CSI spatial pattern 2 may be requested. When the value of the CSI pattern request in the DCI is set to 3, CSI spatial pattern 1 and CSI spatial pattern 2 may be requested.

Table 4 below illustrates a mapping between the field CSI Pattern Request and the pattern in the sub-config to be reported using a bitmap, according to an example implementation of the present disclosure.

Table 4

| Bitmap | Pattern Selected |
|---|---|
| 000 | No pattern |
| 001 | 1 |
| 010 | 2 |
| 100 | 3 |
| 011 | 1, 2 |
| 101 | 1, 3 |
| 111 | 1, 2, 3 |

When all the bits of the CSI pattern request field in the DCI are set to zero, no CSI pattern is requested. When the bits of the CSI pattern request field in the DCI are set to 001, CSI pattern 1 is requested. When the bits of the CSI pattern request field in the DCI are set to 010, CSI pattern 2 is requested. When the bits of the CSI pattern request field in the DCI are set to 011, CSI pattern 1 and CSI pattern 2 are requested. The total number of bits in the field of the CSI pattern request may be indicated by a higher layer parameter.

**- Multiple spatial pattern measurement and report**

Multiple spatial pattern measurement and report feedbacks may be supported. The timing interval between each CSI-RS reception and measurement report may be defined. The CSI-RS assignment at predetermined intervals may be needed for the network and the UE to correctly transmit/receive signals.

FIG. 13 is a diagram 1300 illustrating multiple CSI-RS spatial patterns transmission between the serving RAN and a UE, according to an example implementation of the present disclosure. The transmit interval x for the network (e.g., the serving RAN, the base station, etc.) to adapt the spatial pattern may be needed. In other words, a time duration of at least x is between any two transmission instances of the CSI-RS associated with the different spatial patterns. For the first transmission instance of aperiodic CSI-RS triggered offset may be configured per resource set by the higher layer parameter *aperiodicTriggeringOffset* or *aperiodicTriggeringOffset-r16*. For example, if the *aperiodicTriggeringOffset* or the *aperiodicTriggeringOffset-r16* indicates T, the first transmission instance of aperiodic CSI-RS triggered by the DCI (e.g., a DCI format 0_1 or DCI format 0_2) received in slot n may be received in slot n+T.

The pattern adaptation may correspond to the antenna elements on-off switching implementation. The transmit interval x in FIG. 13 may stand for the minimum interval between the consecutive transmissions of the CSI-RS spatial pattern.

The 5G design may include scalable TTI, which may correspond to the slot durations 62.5/μs to 1ms. One or more consecutive slots allocated to either DL or UL may make up a TTI. The 5G system may also incorporate mini-slot transmissions, which may be similar to the shortened TTI in the LTE system.

The transition time may be determined based on the UE capability or the gNB configuration. For example, the transition time for the first pattern may be $x_0$, the transition time for the second pattern may be $x_1$, and so on. The minimum interval between the consecutive transmissions of the CSI-RS spatial pattern may be defined as $x = \max_j x_j$, where j may be from 0 to $N_{Pattern}$ - 1, and $N_{Pattern}$ may be the number of patterns.

**- Multiple spatial pattern CSI joint report**

When UL-SCH indicator field is set to ‘ 1’, the A-CSI may be multiplexed with UL-SCH, and the number of REs for A-CSI may be calculated, for example, as specified in the 3GPP TS 38.212 V17.5.0, and the slot $n+K_2$ in which the PUSCH is transmitted may be determined by the entry for $K_2$ value in the row of the TDRA table, which may be indicated by the TDRA field of the DCI transmitted in slot *n*.

When UL-SCH indicator field is set to ’0’ in DCI format 0_1 or DCI format 0_2, the A-CSI may be mapped on the REs allocated for the PUSCH, and the slot in which the PUSCH is transmitted may be determined by the TDRA field value $m$ of the DCI transmitted in slot n, and the $K_2$ value may be determined as $K_2 = \max_j Y_j(m+1)$, where $Y_j$, $j$ = 0,..., $N_{Rep}$ - 1 are the corresponding list entries of the higher layer parameter *reportSlotOffsetList* in *CSI-ReportConfig* for the $N_{Rep}$ triggered CSI Reporting Settings and $Y_j(m + 1)$ is the $(m+1)^{th}$ entry of $Y_j$.

FIG. 14 is a diagram 1400 illustrating association between a CSI report configuration and a CSI report sub-configuration, according to an example implementation of the present disclosure. $Y_j = \max_k Z_{jk}$ and $Z_{jk}$ are the corresponding list entries of the higher layer parameter *reportSlotOffsetsubList* in the *CSI-ReportSubConfig* for the $N_{j,Pattern}$ patterns for report configuration j in the settings as in FIG. 14 and in FIG. 9. $k = 0,...,N_{j,Pattern} - 1$. $Z_{jk}$ is the k-th pattern for the j-th report configuration.

A new IE *reportSlotOffsetsubList* may be introduced and defined as the list of slots in *CSI-ReportSubConfig.*

For multiple sub-pattern CSI report interval, the $K_2$ value may be seen as the offset y between the DCI reception and the joint CSI report as illustrated in FIG. 13.

- **Further energy saving enhancement**

The network (e.g., CN or RAN) may know some channel conditions from the periodic/semi-persistent measurement and report beforehand. The network may determine whether to adapt the spatial pattern from the less timely periodic or semi-persistent CSI measurements.

The (DL) RSRP/CQI may then be evaluated after the adaptation of the spatial pattern. The spatial adaptation based on the aperiodic CSI may be triggered again at the presence of the un-qualification of the RSRP/CQI value.

- **Go back to full port configuration**

There may be thresholds for some criteria (e.g. (DL/UL) RSRP) for the network to determine whether to request the UE to measure a complete CSI and then determine whether to turn on the antenna ports that have been turned off.

The full port measurement indication may also be based on cells (e.g., SIB-based signal) or based on the UE specific control signaling (e.g., RRC signaling/MAC CE/group common DCI/UE-specific DCI).

For aperiodic CSI, the group common DCI/DCI may indicate a group of UEs or a UE to measure the full ports' conditions in some implementations.

For the periodic/semi-persistent CSI, the MAC CE may indicate a specific UE to measure the full ports' conditions in some implementations.

**Overhead reduction**

Some parameters may be shared across different CSI report configurations associated with different spatial adaptation patterns. There may be several aspects of the overhead reduction, including configuration overhead reduction, report overhead reduction, UE measurement and report complexity reduction, etc.

- **Delta configuration**

The sub-configuration, as discussed above, may be used to expand the total number of spatial patterns to be reported. Further enhancement may involve treating the *CSI-ReportConfig* as a common/baseline configuration and each sub configuration of the *CSI-ReportSubConfig* as the delta configuration of the *CSI-ReportConfig.* For example, each sub configuration may have the same frequency domain and codebook domain configuration but have different time domain configurations. The sub configuration of the *CSI-ReportSubConfig* may only need to configure and report the time domain configuration, e.g., the *reportSlotOffsetList* for aperiodic CSI report. FIG. 15 is a diagram 1500 illustrating an example *CSI-ReportSubConfig* as a delta configuration, according to an example implementation of the present disclosure.

- **Report content reduction**

RSRP and RSSI values may be used to partially replace the CSI report of the PMI.

The *reportQuantity* in the *CSI-ReportConfig* may indicate to the UE(s) what to measure. For the Codebook/Non-codebook based precoding matrix report feedback, the signaling overhead may be considerable. The substitution may be a mixed strategy of measurement report. For the first indicated spatial pattern report, the measurement quantity may be a precoding matrix and a value of CQI. For the second and following indicated spatial pattern report feedback, the measurement quantity may be a CQI without the precoding matrix information. The network may receive the precoding matrix for the first indicated pattern and then deduce the second and following precoding matrix based on the received delta CQI.

Some new report quantities may be as follow: The first indicated spatial pattern report quantity - PMI and CQI, the second indicated spatial pattern report quantity - CQI only, and the third indicated spatial pattern report quantity - CQI only. The IEs in the *reportQuantity* may be found in the *CSI-ReportConfig* in the 3GPP TS 38.331 V17.4.0.

- **UE selection**

The network may request the UEs to measure multiple patterns and report multiple CSI, which may also lead to signal overhead. If the UE has the capability to select the preferred spatial pattern, it may reduce the overall report loading. A new IE *ReportSubConfigId_NumSelection* may be introduced and added in the *CSI-ReportConfig.*

FIG. 16 is a diagram 1600 illustrating an example data structure of an IE *CSI-AperiodicTriggerState,* according to an example implementation of the present disclosure. The new IE *ReportSubConfigId_NumSelection* may indicate the exact total number of reports that the UE may select to report. The value of the *ReportSubConfigId_NumSelection* may be smaller than the *maxNrofReportSubConfig.*

If the IE *ReportSubConfigId_NumSelection* is not activated, the *maxNrofReportSubConfig* may indicate the maximum total number of reports the UE may report. If the IE *ReportSubConfigId_NumSelection* is activated, the value of the *ReportSubConfigId_NumSelection* may indicate the exact total number of reports that the UE may select to report.

**The impact of spatial domain adaptations**

After the aperiodic CSI measurement and adjustment, the spatial domain adaptation may also need to be applied to the periodic/semi-persistent/aperiodic CSI mechanism. The impact of the spatial pattern adaptations on the periodic/semi-persistent CSI report may also be evaluated. It may be necessary to associate the spatial pattern with periodic/semi-persistent CSI report.

After the network selects the preferred spatial pattern, the network may need to inform the UE and adjust the corresponding transmission. An example data structure of the *CSI-ReportConfig* IE may be found in the 3GPP TS 38.331 V17.4.0.

In some implementations, for the periodic CSI, the network (e.g., E-UTRAN or NR-RAN) may use the RRC signaling to reconfigure the spatial pattern. For semi-persistent CSI on *semiPersistentOnPUCCH*, the network may use the MAC CE to reconfigure the spatial pattern.

FIG. 17 is a diagram illustrating a MAC CE 1700 for activation/deactivation of semi-persistent CSI reporting, according to the 3GPP TS (*see*, e.g., the 3GPP TS 38.321 V17.4.0 figure 6.1.3.16-1). The MAC CE 1700 may include 16 bits including: a serving cell ID, a BWP ID, and $S_0$-$S_3$ for indicating activation/deactivation status of the semi-persistent CSI report configuration within the *csi-ReportConfigToAddModList.*

FIG. 18 is a diagram illustrating a MAC CE 1800 for activation/deactivation of spatial patterns, according to an example implementation of the present disclosure. The field S0 may indicate the activation/deactivation status of the first *CSI-ReportConfig*, and the field S1 may indicate the activation/deactivation status of the second *CSI-ReportConfig.* A new field P00 may indicate the activation/deactivation status of the first pattern in the first *CSI-ReportConfig.* A new field P01 may indicate the activation/deactivation status of the second pattern in the first *CSI-ReportConfig.* A new field P10 may indicate the activation/deactivation status of the first pattern in the second *CSI-ReportConfig.* Similarly, the fields P11, P12, P13 may indicate the activation/deactivation status of the second, third, fourth pattern in the second *CSI-ReportConfig*, respectively.

For the semi-persistent CSI on *semiPersistentOnPUSCH*, the network may use the DCI to reconfigure the spatial pattern, which may be the same as the aperiodic CSI report method, as described above. For semi-persistent reporting on the PUSCH, a set of trigger states may be configured by a higher layer parameter, such as the *CSI-SemiPersistentOnPUSCH-TriggerStateList*, where the CSI request field in the DCI format 0_1 scrambled with the SP-CSI-RNTI activates one of the trigger states. A new field *CSI Pattern Request* in the DCI format 0_1 or DCI format 0_2 may be introduced. The new field *CSI Pattern Request* may indicate the sub-config in the report. The mapping between the field *CSI Pattern Request* and the pattern in the sub-config to be reported may utilize indexing or bitmapping.

In some implementations, there may be a unified method to reconfigure the periodic/semi-persistent CSI report. The new field in the MAC CE 1800 in FIG. 18 may be used to indicate the pattern in the *CSI-ReportConfig* under the unification.

In some implementations, carrier aggregation may be a technique that may be used to increase the data rate per user, whereby multiple frequency blocks (called component carriers) may be assigned to the same user. The spatial pattern adaptation may be configured per BWP. Carrier aggregation techniques may provide a UE with more combinations of spatial patterns due to the expansion of the CC. There may be an indication for the UE to adapt the spatial pattern across the BWP or CC.

For the aperiodic/periodic/semi-persistent CSI, there may be a unified method to reconfigure and indicate the CSI report.

FIG. 19 is a diagram illustrating a MAC CE 1900 for indicating spatial patterns for different BWPs on different CCs, according to an example implementation of the present disclosure. For example, there may be two CCs (e.g. CC1 and CC2) serving the UE and each CC may have at most four BWPs (e.g. BWP #1, BWP #2, BWP #3, and BWP #4 in CC1; and BWP #1, BWP #2, BWP #3, and BWP #4 in CC2).

For example, the network may need to know the CSI report of spatial patterns from the CC1 but in different BWPs, including BWP #1 and BWP #4 in CC1. The network may configure the fields in the MAC CE 1900 as follows: Serving Cell ID1 = CC1 ID, Serving Cell ID2 = CC2 ID, BWP ID1 = the ID of BWP #1 in CC1, BWP ID2 = the ID of BWP #4 in CC1.

For example, the network may need to know the CSI report of spatial patterns from the CC1 and CC2 in different BWPs, including BWP #2 in CC1 and BWP #3 in CC2. The network may configure the fields in the MAC CE 1900 as follows: Serving Cell ID1 = CC1 ID, Serving Cell ID2 = CC2 ID, BWP ID1 = the ID of BWP #2 in CC1, BWP ID2 = the ID of BWP #3 in CC2.

**How to adapt the power offset between the PDSCH and the CSI-RS**

The network may adapt the transmission power downlink signals and channels dynamically, by enhancing the related configuration to the UE (e.g., considering power offsets that account for potential power adaptation) to assist network energy saving operation.

For different spatial adaptations, the power offsets between the PDSCH and the CSI-RS may be different. The value of the offsets may need to be updated efficiently and transmitted to the UEs.

In some implementations, a new field in the DCI format 0_1 or DCI format 0_2 may indicate the power of the CSI-RS transmission based on different spatial patterns.

The SSB reference power, the *ss-PBCH-BlockPower*, may be defined in the SIB1. The *powerControlOffsetSS* that is the power offset between (NZP) CSI-RS and SSB, and the *powerControlOffset* that is the power offset between PDSCH and (NZP) CSI-RS, may be semi-statically configured via RRC signaling. The power offset configurations for the PDSCH and the CSI-RS may be BWP-specific. The base station (e.g., gNB) may be allowed to adapt the PDSCH transmission power.

In some implementations, two new IEs *subpowercontrolOffsetlist* and *subpowercontrolOffsetSSlist* may be introduced and added in the *NZP-CSI-RS-Resource.* An example data structure of the *NZP-CSI-RS-Resource* may be found in the 3GPP TS 38.331 V17.4.0. The new IE *subpowercontrolOffsetlist* may indicate the list of the *powercontrolOffset* for every pattern. The new IE *subpowercontrolOffsetSSlist* may indicate the list of the *powercontrolOffsetSS* for every pattern.

The field *CSI Pattern Request* in the DCI format 0_1 or DCI format 0_2 may codepoint out which sub power offset may be indicated.

In some implementations, there may be a new field in the DCI format 0_1 or DCI format 0_2 to indicate the sub power offset corresponding to the spatial pattern.

FIG. 20 is a flowchart 2000 illustrating a method/process performed by a UE for reporting CSI, according to an example implementation of the present disclosure. In action 2002, the UE may receive, from a BS, a CSI-RS resource set configuration. The CSI-RS resource set configuration may indicate one or more CSI-RS resources.

In action 2004, the UE may receive, from the BS, a CSI report configuration including a first resource configuration ID corresponding to the CSI-RS resource set configuration, a report content configuration, and multiple port indicators. Each port indicator may correspond to a CSI measurement result based on a subset of antenna ports. For example, the CSI-RS resource set configuration may include information of a CSI-RS resource, and the first resource configuration ID received in the CSI report configuration may correspond to the CSI-RS resource configured in the CSI-RS resource set configuration. The port indicator may indicate one or more antenna ports for the CSI measurement. For example, there may be 32 antenna ports, and one of the port indicators may correspond to a subset of the 32 antenna ports, such as 8 antenna ports selected from the 32 antenna ports. The UE may perform the CSI measurement on the 8 antenna ports indicated by the port indicator to obtain a CSI measurement result. In other words, one port indicator may correspond to a CSI measurement result measured on the antenna ports indicated by the port indicator.

In action 2006, the UE may receive, from the BS, the DCI for triggering an aperiodic CSI report associated with the CSI report configuration. For example, the DCI may include a field that corresponds to an aperiodic trigger state configured via the higher layer signaling.

In action 2008, the UE may transmit, to the BS, a CSI report associated with the CSI report configuration in response to receiving the DCI. For example, the UE may determine which CSI-RS resource to be used based on the first resource configuration ID, determine which antenna ports to be used for measurement based on the port indicators, and determine the content to be included in the CSI report based on the report content configuration.

The technical problem addressed by the method illustrated in FIG. 20 is how to efficiently report the CSI from a UE to a BS in a wireless communication system. The inclusion of port indicators in the CSI report configuration may allow the UE to report the CSI measurements based on specific antenna ports, providing detailed information about the channel conditions. Consequently, the UE may be able to transmit, to the BS, a single CSI report that includes multiple CSI measurement results corresponding to different combinations of antenna ports. More specifically, multiple CSI measurement results for different antenna port combinations may be obtained by receiving only one CSI report configuration and transmitting only one CSI report. The BS may use the multiple CSI measurement results to determine how to reduce the active antenna ports. This method may help to improve the overall performance of the wireless communication system by reducing the signaling overhead, leading to an enhanced resource allocation and optimization.

In some implementations, each port indicator may include a bitmap having a length equal to the number of antenna ports of a CSI-RS resource configured in the CSI-RS resource set configuration. Each port indicator may correspond to a different subset of antenna ports of the CSI-RS resource. For example, the CSI-RS resource may have 32 antenna ports. Each port indicator may include a bitmap having 32 bits, with each bit corresponding to a respective antenna port. Each port indicator may have different bit values in the bitmap, thus corresponding to different subsets of the antenna ports. For example, the antenna ports may be indexed from 1 to 32, the first port indicator may correspond to the antenna ports {1, 2, 3, 4}, the second port indicator may correspond to the antenna ports {5, 6, 7, 8}, the third port indicator may correspond to the antenna ports {2, 4, 6, 8, 10, 12, 14, 16}, and so on.

In some implementations, the method may further include receiving, from the BS, a CSI aperiodic trigger state configuration including a CSI report configuration ID corresponding to the CSI report configuration. Examples of a CSI aperiodic trigger state configuration may be found in FIG. 2, FIG. 8, FIG. 9, and FIG. 16. The CSI report configuration ID may correspond to the IE *reportConfigId* in the *CSI-AssociatedReportConfigInfo* illustrated in the aforementioned figures. The CSI report configuration ID may correspond to the CSI report configuration received in action 2004 of FIG. 20.

In some implementations, the CSI report configuration ID may be associated with at least one sub-configuration ID, and each sub-configuration ID may correspond to one of the port indicators. For example, the CSI report configuration may include $L$ CSI report sub-configurations, where $L$ is a positive integer. The CSI report configuration ID, which is included in the CSI aperiodic trigger state configuration, may be associated with $N$ sub-configuration IDs, where $N$ is a positive integer less than or equal to $L$. The $N$ sub-configuration IDs in the CSI aperiodic trigger state configuration may be selected from the $L$ CSI report sub-configurations in the CSI report configuration. Each sub-configuration ID associated with the CSI report configuration ID in the CSI aperiodic trigger state configuration may correspond to one of the port indicators in the CSI report configuration.

In some implementations, the CSI report may include at least one CSI measurement result corresponding to the at least one sub-configuration ID. Specifically, the aperiodic CSI report may be triggered by the DCI and the port combinations for the CSI measurement may depend on the sub-configuration IDs in the CSI aperiodic trigger state configuration associated with the DCI. The UE may perform measurements on specific subsets of the antenna ports based on the at least one sub-configuration ID indicated in the CSI aperiodic trigger state configuration.

FIG. 21 is a flowchart 2100 illustrating a method/process performed by a BS for configuring CSI reporting, according to an example implementation of the present disclosure. In action 2102, the BS may transmit, to a UE, a CSI-RS resource set configuration. In action 2104, the BS may transmit, to the UE, a CSI report configuration including a first resource configuration ID corresponding to the CSI-RS resource set configuration, a report content configuration, and multiple port indicators. Each port indicator may correspond to a CSI measurement result based on a subset of antenna ports. In action 2106, the BS may transmit, to the UE, the DCI for triggering an aperiodic CSI report associated with the CSI report configuration. In action 2108, the BS may receive, from the UE, a CSI report associated with the CSI report configuration in response to transmitting the DCI. The method illustrated in FIG. 21 is similar to that in FIG. 20, except that it is described from the perspective of the BS that configures the CSI reporting.

FIG. 22 is a block diagram illustrating a node 2200 for wireless communication in accordance with various aspects of the present disclosure. As illustrated in FIG. 22, a node 2200 may include a transceiver 2220, a processor 2228, a memory 2234, one or more presentation components 2238, and at least one antenna 2236. The node 2200 may also include a radio frequency (RF) spectrum band module, a BS communications module, a network communications module, and a system communications management module, Input / Output (I/O) ports, I/O components, and a power supply (not illustrated in FIG. 22).

Each of the components may directly or indirectly communicate with each other over one or more buses 2240. The node 2200 may be a UE or a BS that performs various functions disclosed with reference to FIGS. 1 through 21.

The transceiver 2220 has a transmitter 2222 (e.g., transmitting/transmission circuitry) and a receiver 2224 (e.g., receiving/reception circuitry) and may be configured to transmit and/or receive time and/or frequency resource partitioning information. The transceiver 2220 may be configured to transmit in different types of subframes and slots including, but not limited to, usable, non-usable, and flexibly usable subframes and slot formats. The transceiver 2220 may be configured to receive data and control channels.

The node 2200 may include a variety of computer-readable media. Computer-readable media may be any available media that may be accessed by the node 2200 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information such as computer-readable instructions, data structures, program modules, or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave, or other transport mechanisms and include any information delivery media.

The term "modulated data signal" may mean a signal that has one or more of its characteristics set or changed in such a manner as to encode information in the signal. Communication media may include wired media, such as a wired network or direct-wired connection, and wireless media, such as acoustic, RF, infrared, and other wireless media. Combinations of any of the above listed components should also be included within the scope of computer-readable media.

The memory 2234 may include computer-storage media in the form of volatile and/or non-volatile memory. The memory 2234 may be removable, non-removable, or a combination thereof. Example memory may include solid-state memory, hard drives, optical-disc drives, etc. As illustrated in FIG. 22, the memory 2234 may store a computer-readable and/or computer-executable instructions 2232 (e.g., software codes) that are configured to, when executed, cause the processor 2228 to perform various functions disclosed herein, for example, with reference to FIGS. 1 through 21. Alternatively, the instructions 2232 may not be directly executable by the processor 2228 but may be configured to cause the node 2200 (e.g., when compiled and executed) to perform various functions disclosed herein.

The processor 2228 (e.g., having processing circuitry) may include an intelligent hardware device, e.g., a Central Processing Unit (CPU), a microcontroller, an ASIC, etc. The processor 2228 may include memory. The processor 2228 may process the data 2230 and the instructions 2232 received from the memory 2234, and information transmitted and received via the transceiver 2220, the baseband communications module, and/or the network communications module. The processor 2228 may also process information to send to the transceiver 2220 for transmission via the antenna 2236 to the network communications module for transmission to a CN.

One or more presentation components 2238 may present data indications to a person or another device. Examples of presentation components 2238 may include a display device, a speaker, a printing component, a vibrating component, etc.

In view of the present disclosure, it is obvious that various techniques may be used for implementing the disclosed concepts without departing from the scope of those concepts. Moreover, while the concepts have been disclosed with specific reference to certain implementations, a person of ordinary skill in the art may recognize that changes may be made in form and detail without departing from the scope of those concepts. As such, the disclosed implementations are to be considered in all respects as illustrative and not restrictive. It should also be understood that the present disclosure is not limited to the particular implementations disclosed and many rearrangements, modifications, and substitutions are possible without departing from the scope of the present disclosure.

## Claims

**1.** A method performed by a User Equipment (UE) for reporting Channel State Information (CSI), the method comprising:

receiving, from a Base Station (BS), a CSI-Reference Signal (CSI-RS) resource set configuration;
receiving, from the BS, a CSI report configuration including a first resource configuration identifier (ID) corresponding to the CSI-RS resource set configuration, a report content configuration, and a plurality of port indicators, each of the plurality of port indicators corresponding to a CSI measurement result based on a subset of antenna ports;
receiving, from the BS, Downlink Control Information (DCI) for triggering an aperiodic CSI report associated with the CSI report configuration; and
transmitting, to the BS, a CSI report associated with the CSI report configuration in response to receiving the DCI.

**2.** The method of claim 1, wherein:

each of the plurality of port indicators comprises a bitmap having a length equal to a number of antenna ports of a CSI-RS resource configured in the CSI-RS resource set configuration, and
each of the plurality of port indicators corresponds to a different subset of antenna ports of the CSI-RS resource.

**3.** The method of claim 1, further comprising:
receiving, from the BS, a CSI aperiodic trigger state configuration including a CSI report configuration ID corresponding to the CSI report configuration.

**4.** The method of claim 3, wherein the CSI report configuration ID is associated with at least one sub-configuration ID, and each sub-configuration ID corresponds to one of the plurality of port indicators.

**5.** The method of claim 4, wherein the CSI report includes at least one CSI measurement result corresponding to the at least one sub-configuration ID.

**6.** A User Equipment (UE) for reporting Channel State Information (CSI), the UE comprising:

at least one processor; and
at least one non-transitory computer-readable medium storing one or more instructions that, when executed by the at least one processor, cause the UE to:

receive, from a Base Station (BS), a CSI-Reference Signal (CSI-RS) resource set configuration;
receive, from the BS, a CSI report configuration including a first resource configuration identifier (ID) corresponding to the CSI-RS resource set configuration, a report content configuration, and a plurality of port indicators, each of the plurality of port indicators corresponding to a CSI measurement result based on a subset of antenna ports;
receive, from the BS, Downlink Control Information (DCI) for triggering an aperiodic CSI report associated with the CSI report configuration; and
transmit, to the BS, a CSI report associated with the CSI report configuration in response to receiving the DCI.

**7.** The UE of claim 6, wherein:

each of the plurality of port indicators comprises a bitmap having a length equal to a number of antenna ports of a CSI-RS resource configured in the CSI-RS resource set configuration, and
each of the plurality of port indicators corresponds to a different subset of antenna ports of the CSI-RS resource.

**8.** The UE of claim 6, wherein the one or more instructions, when executed by the at least one processor, further cause the UE to:
receive, from the BS, a CSI aperiodic trigger state configuration including a CSI report configuration ID corresponding to the CSI report configuration.

**9.** The UE of claim 8, wherein the CSI report configuration ID is associated with at least one sub-configuration ID, and each sub-configuration ID corresponds to one of the plurality of port indicators.

**10.** The UE of claim 9, wherein the CSI report includes at least one CSI measurement result corresponding to the at least one sub-configuration ID.

**11.** A Base Station (BS) for configuring Channel State Information (CSI) reporting, the BS comprising:

at least one processor; and
at least one non-transitory computer-readable medium storing one or more instructions that, when executed by the at least one processor, cause the BS to:

transmit, to a User Equipment (UE), a CSI-Reference Signal (CSI-RS) resource set configuration;
transmit, to the UE, a CSI report configuration including a first resource configuration identifier (ID) corresponding to the CSI-RS resource set configuration, a report content configuration, and a plurality of port indicators, each of the plurality of port indicators corresponding to a CSI measurement result based on a subset of antenna ports;
transmit, to the UE, Downlink Control Information (DCI) for triggering an aperiodic CSI report associated with the CSI report configuration; and
receive, from the UE, a CSI report associated with the CSI report configuration in response to transmitting the DCI.

**12.** The BS of claim 11, wherein:

each of the plurality of port indicators comprises a bitmap having a length equal to a number of antenna ports of a CSI-RS resource configured in the CSI-RS resource set configuration, and
each of the plurality of port indicators corresponds to a different subset of antenna ports of the CSI-RS resource.

**13.** The BS of claim 11, wherein the one or more instructions, when executed by the at least one processor, further cause the BS to:
transmit, to the UE, a CSI aperiodic trigger state configuration including a CSI report configuration ID corresponding to the CSI report configuration.

**14.** The BS of claim 13, wherein the CSI report configuration ID is associated with at least one sub-configuration ID, and each sub-configuration ID corresponds to one of the plurality of port indicators.

**15.** The BS of claim 14, wherein the CSI report includes at least one CSI measurement result corresponding to the at least one sub-configuration ID.

100

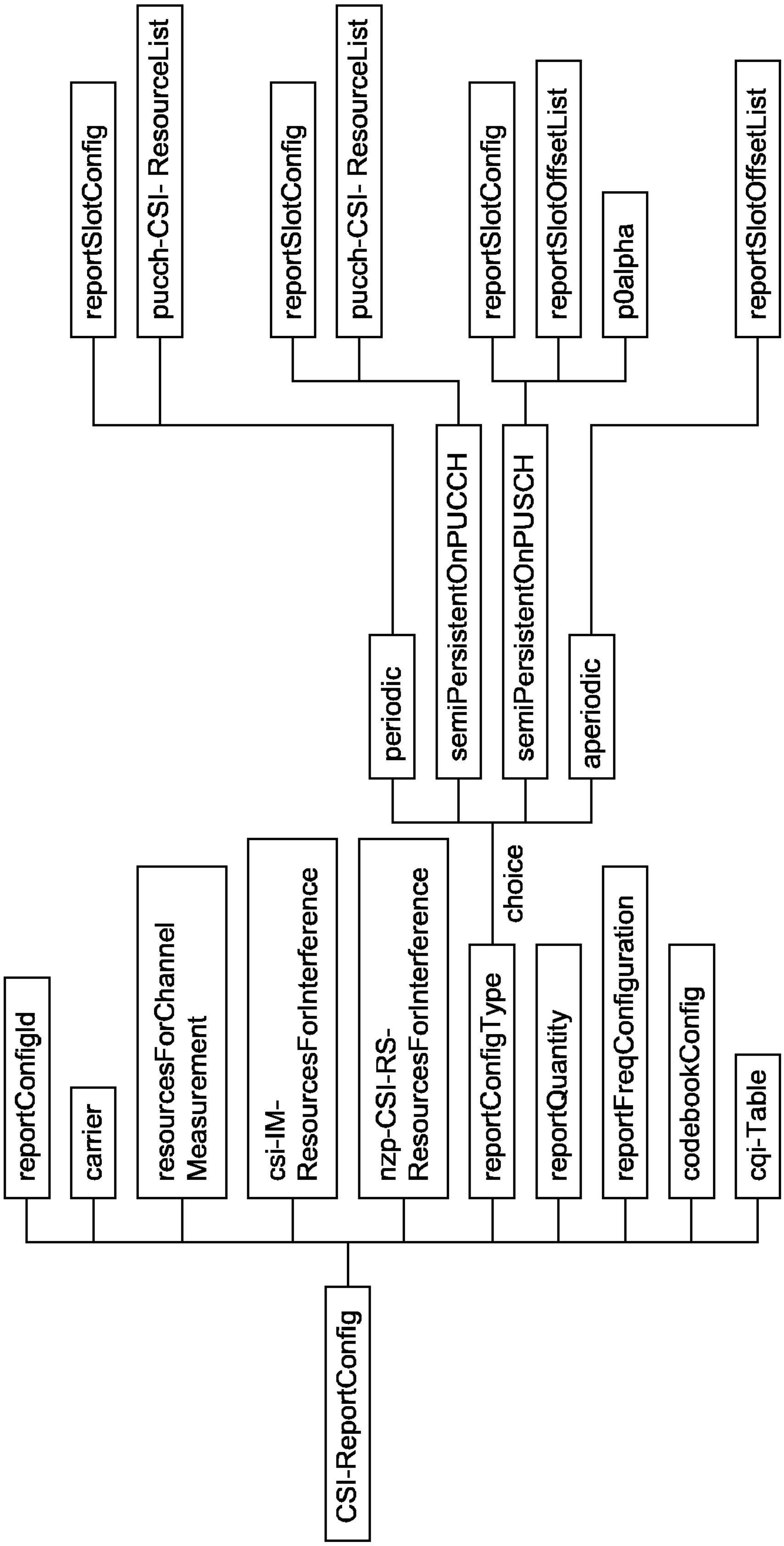
CSI-ReportConfig
reportConfigId
carrier
resourcesForChannel Measurement
csi-IM-ResourcesForInterference
nzp-CSI-RS-ResourcesForInterference
reportConfigType
reportQuantity
reportFreqConfiguration
codebookConfig
cqi-Table
choice
periodic
semiPersistentOnPUCCH
semiPersistentOnPUSCH
aperiodic
reportSlotConfig
pucch-CSI- ResourceList
reportSlotConfig
pucch-CSI- ResourceList
reportSlotConfig
reportSlotOffsetList
p0alpha
reportSlotOffsetList

FIG.1

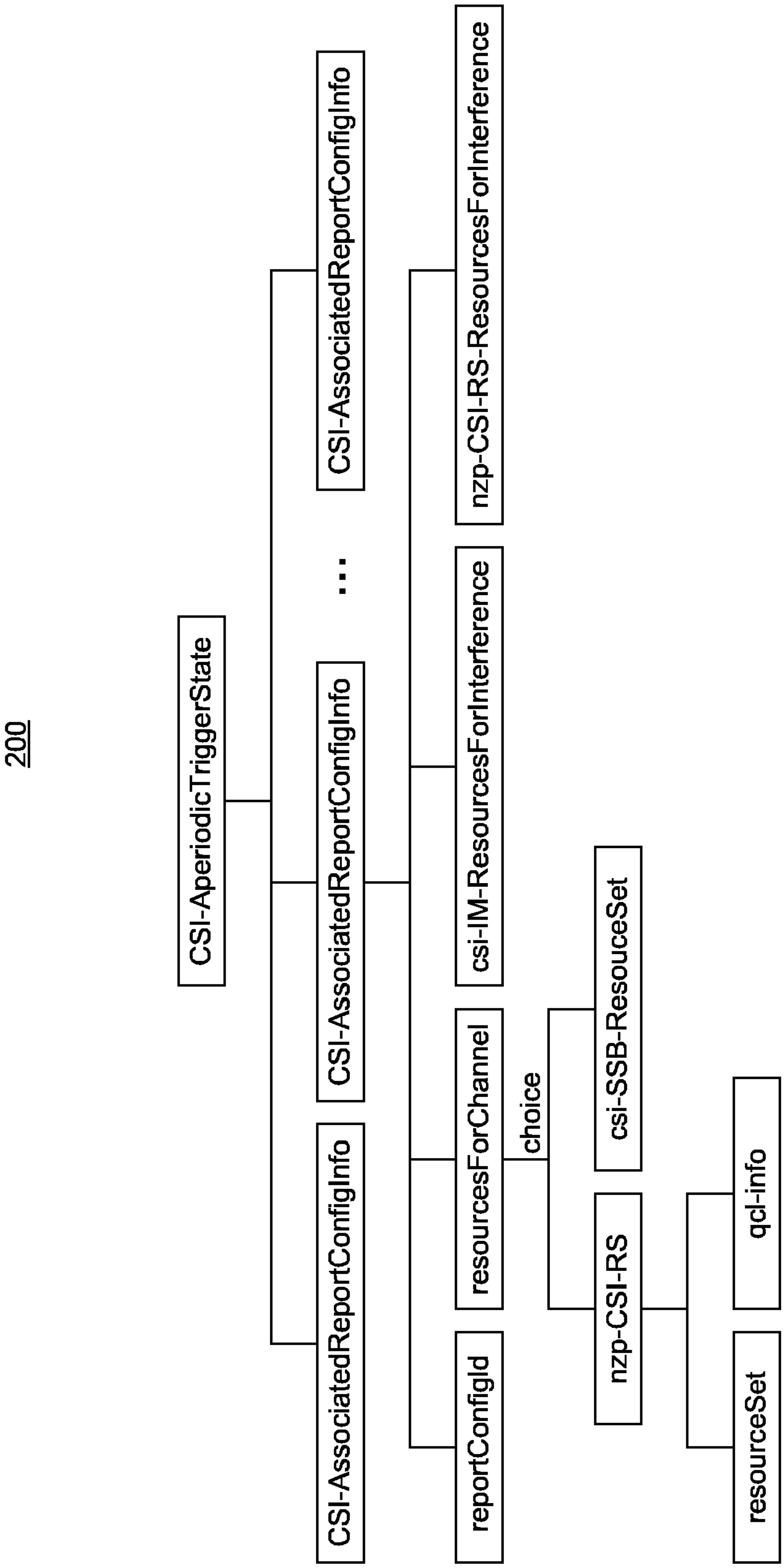
200
CSI-AperiodicTriggerState
CSI-AssociatedReportConfigInfo
CSI-AssociatedReportConfigInfo
...
CSI-AssociatedReportConfigInfo
reportConfigId
resourcesForChannel
csi-IM-ResourcesForInterference
nzp-CSI-RS-ResourcesForInterference
choice
nzp-CSI-RS
csi-SSB-ResouceSet
resourceSet
qcl-info

FIG.2

300

| Number of CSI-RS antenna ports | (N1,N2) | CSI Antenna Port Array (Logical Configuration) |
|---|---|---|
| 4 | (2,1) | XX |
| 8 | (2,2) | XX<br>XX |
| | (4,1) | XXXX |
| 12 | (3,2) | XXX<br>XXX |
| | (6,1) | XXXXXX |
| 16 | (4,2) | XXXX<br>XXXX |
| | (8,1) | XXXXXXXX |
| 24 | (4,3) | XXXX<br>XXXX<br>XXXX |
| | (6,2) | XXXXXX<br>XXXXXX |
| | (12,1) | XXXXXXXXXXXX |
| 32 | (4,4) | XXXX<br>XXXX<br>XXXX<br>XXXX |
| | (8,2) | XXXXXXXX<br>XXXXXXXX |
| | (16,1) | XXXXXXXXXXXXXXXX |

FIG.3

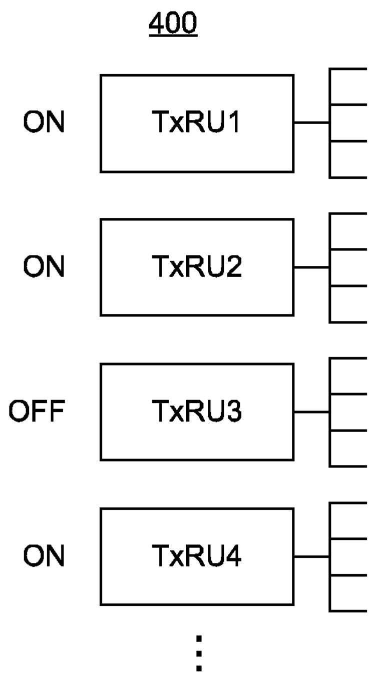
400
ON
TxRU1
ON
TxRU2
OFF
TxRU3
ON
TxRU4

FIG.4

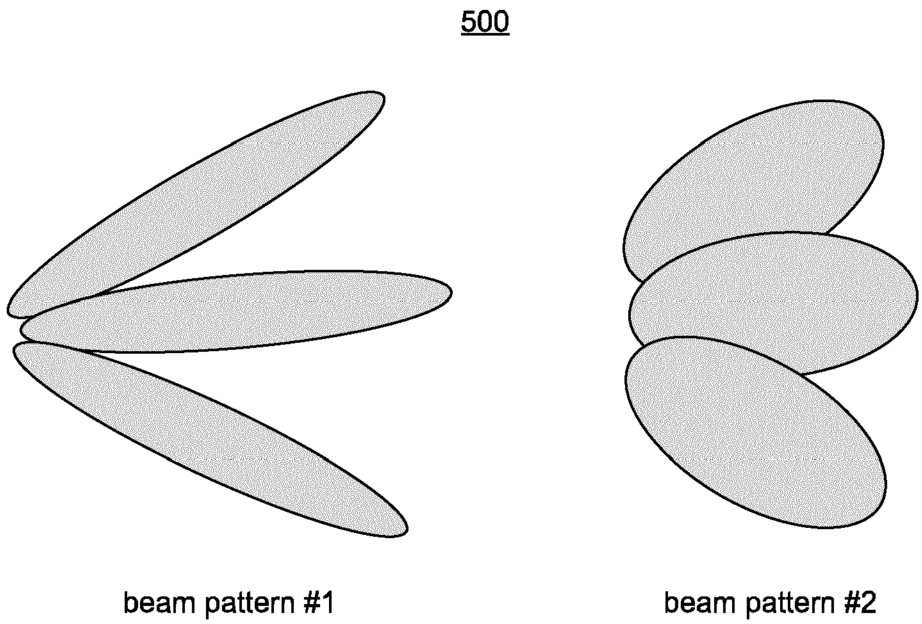
500
beam pattern #1
beam pattern #2

FIG.5

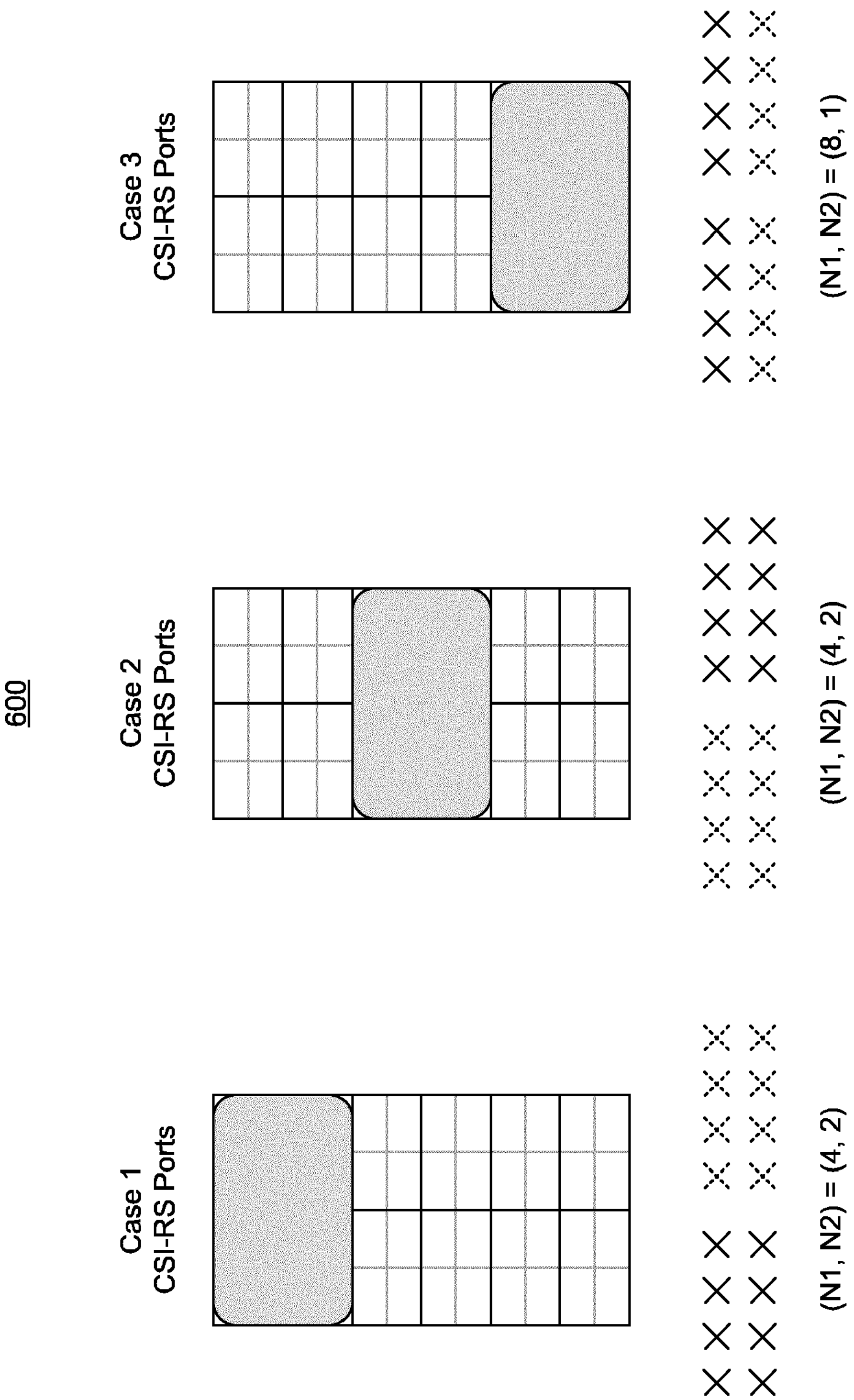
600
Case 1
CSI-RS Ports
(N1, N2) = (4, 2)
Case 2
CSI-RS Ports
(N1, N2) = (4, 2)
Case 3
CSI-RS Ports
(N1, N2) = (8, 1)

FIG.6

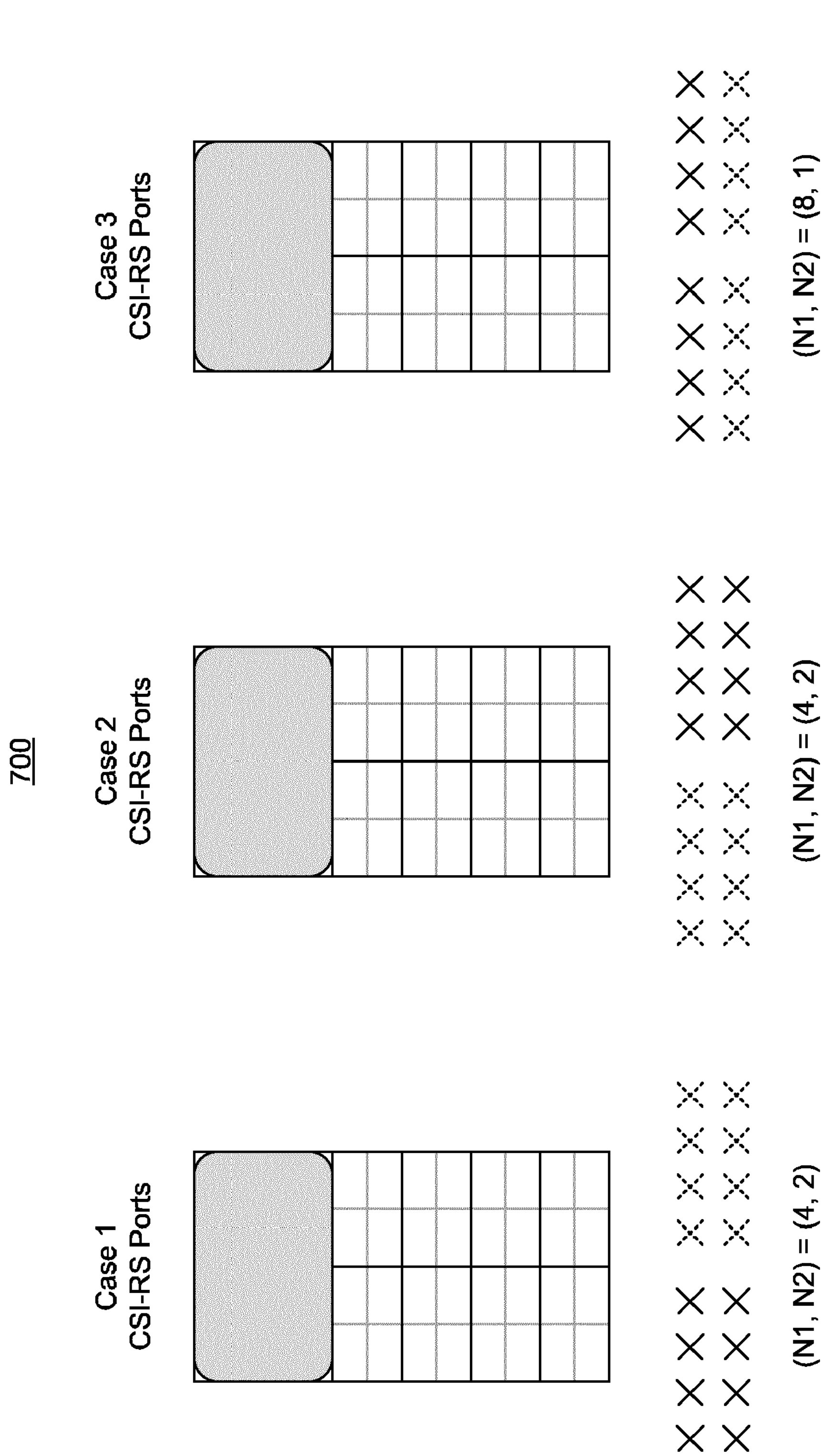
700
Case 1
CSI-RS Ports
(N1, N2) = (4, 2)
Case 2
CSI-RS Ports
(N1, N2) = (4, 2)
Case 3
CSI-RS Ports
(N1, N2) = (8, 1)

FIG.7

800

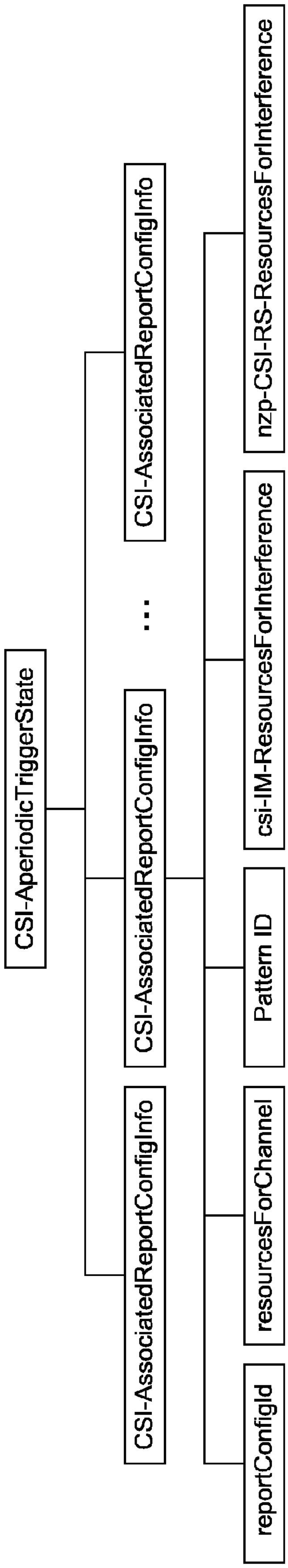
CSI-AperiodicTriggerState
CSI-AssociatedReportConfigInfo
CSI-AssociatedReportConfigInfo
...
CSI-AssociatedReportConfigInfo
reportConfigId
resourcesForChannel
Pattern ID
csi-IM-ResourcesForInterference
nzp-CSI-RS-ResourcesForInterference

FIG.8

900

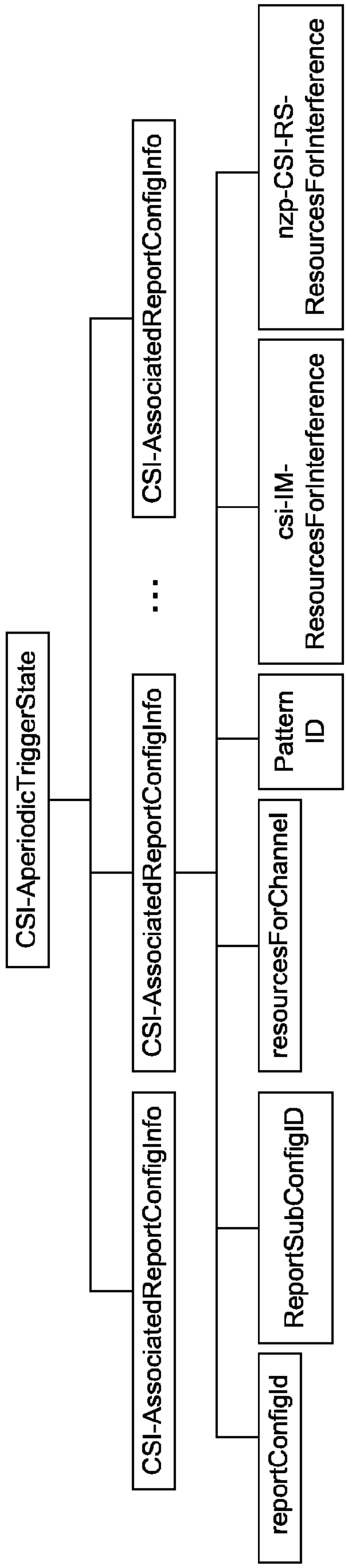
CSI-AperiodicTriggerState
CSI-AssociatedReportConfigInfo
CSI-AssociatedReportConfigInfo
...
CSI-AssociatedReportConfigInfo
reportConfigId
ReportSubConfigID
resourcesForChannel
Pattern ID
csi-IM-ResourcesForInterference
nzp-CSI-RS-ResourcesForInterference

FIG.9

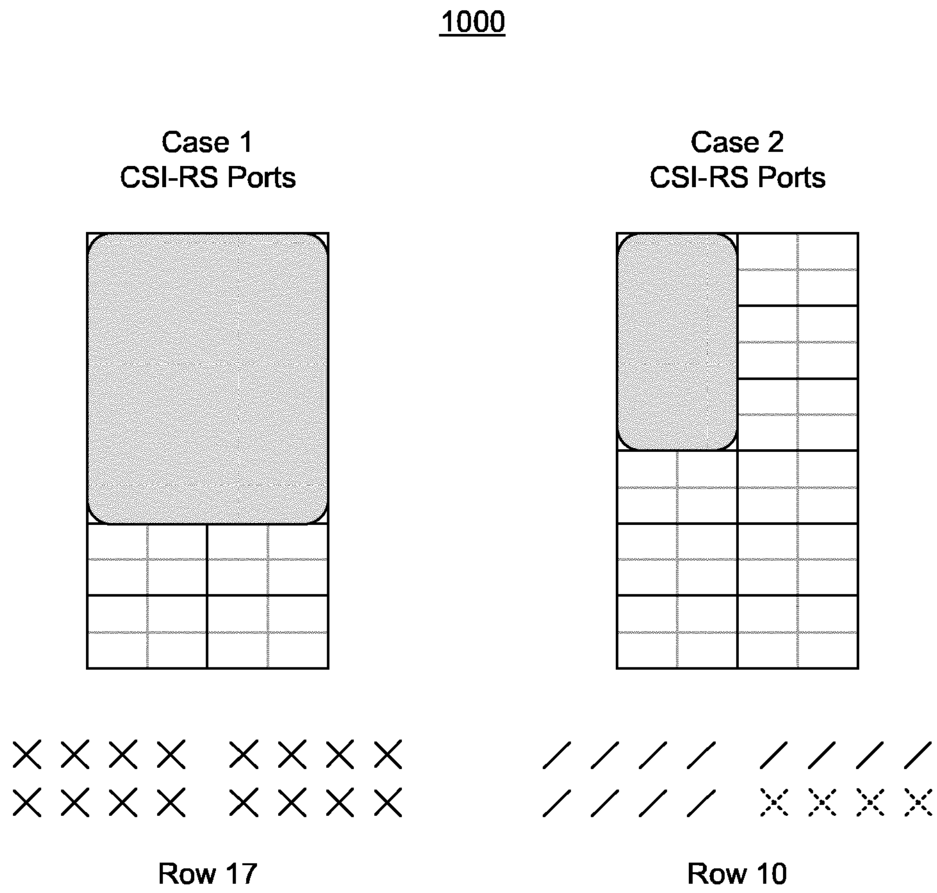


FIG.10

1100A

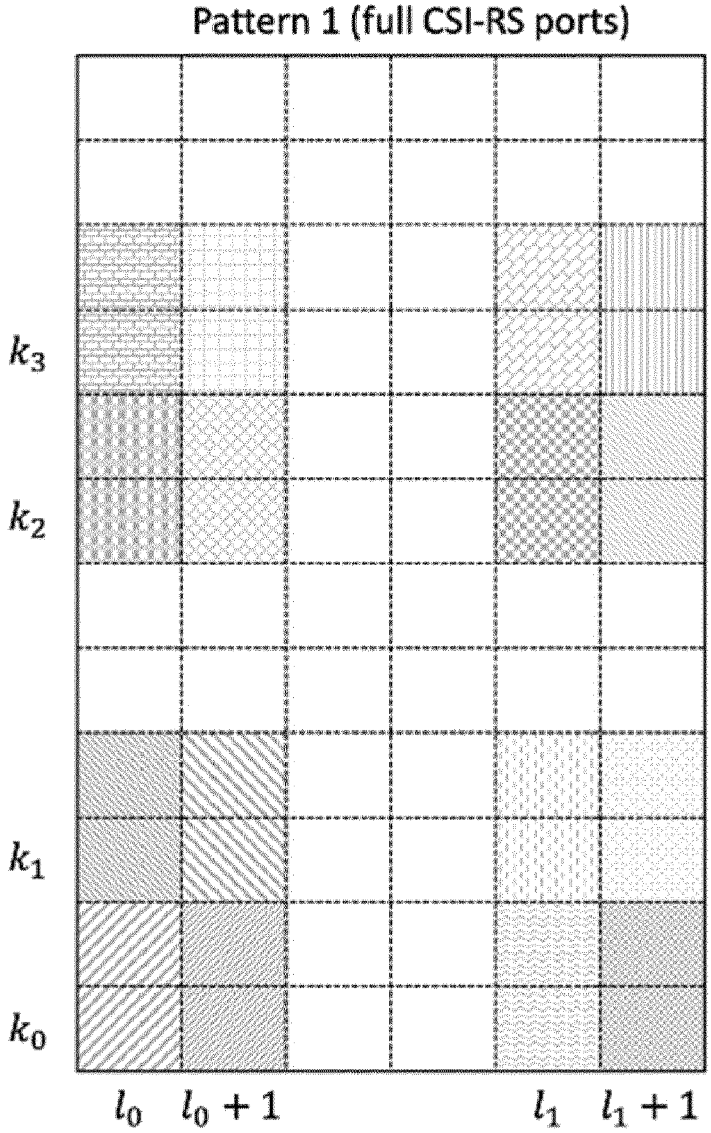


FIG.11A

1100B

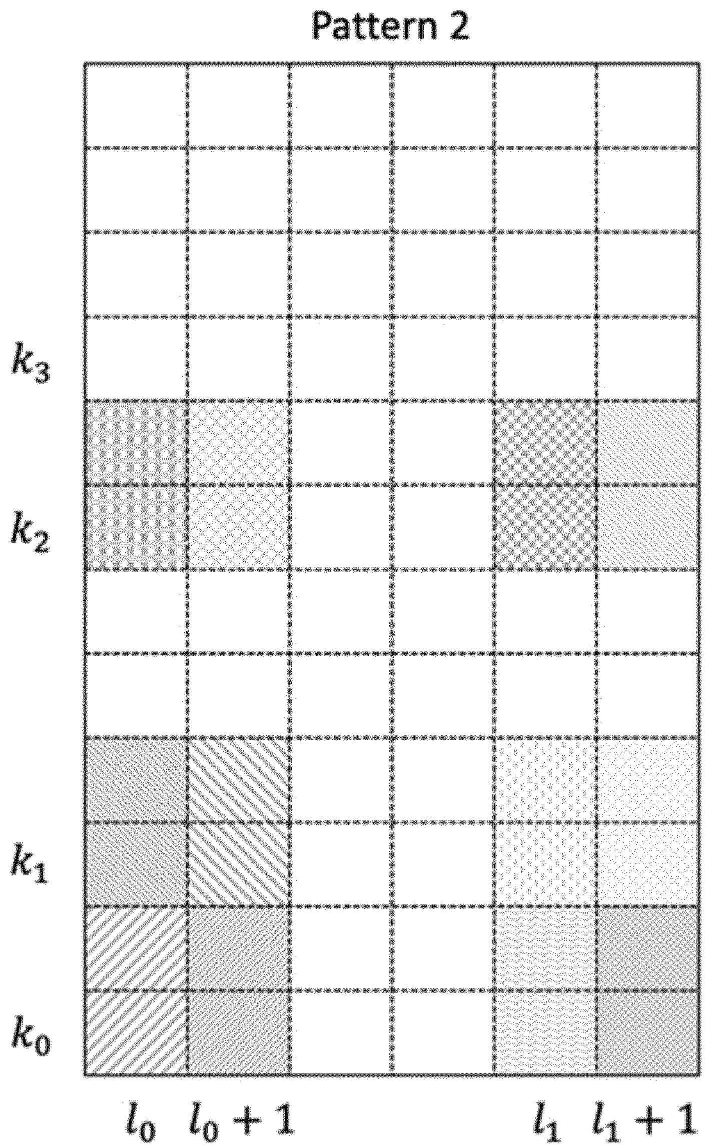


FIG.11B

1100C

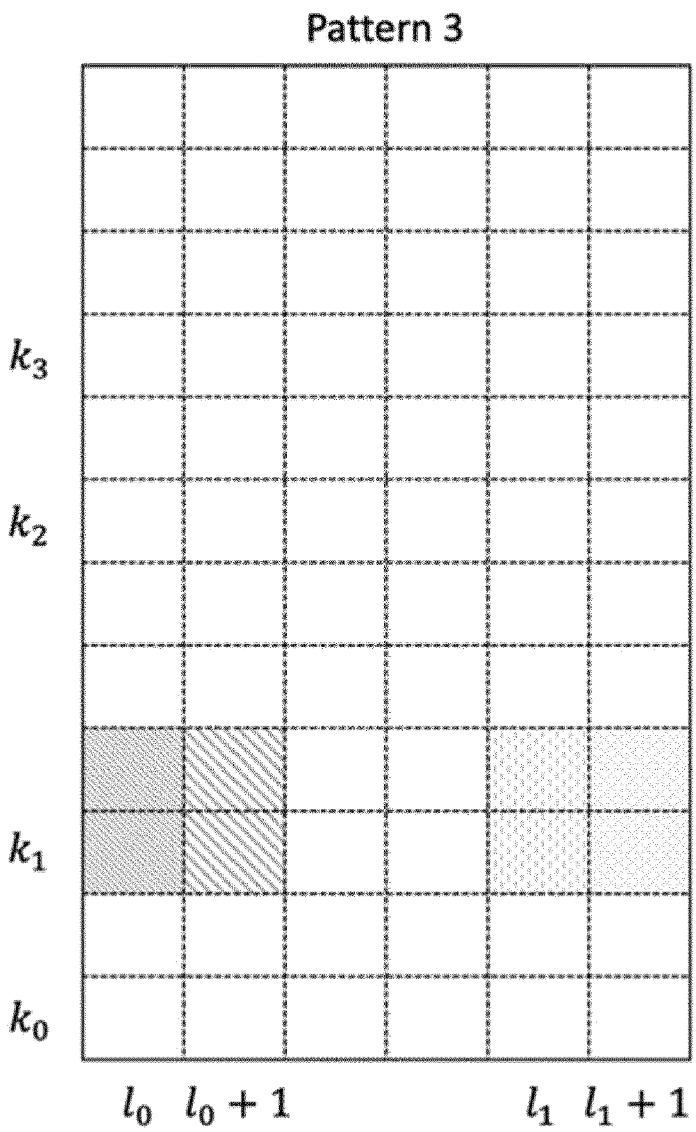


FIG.11C

1100D

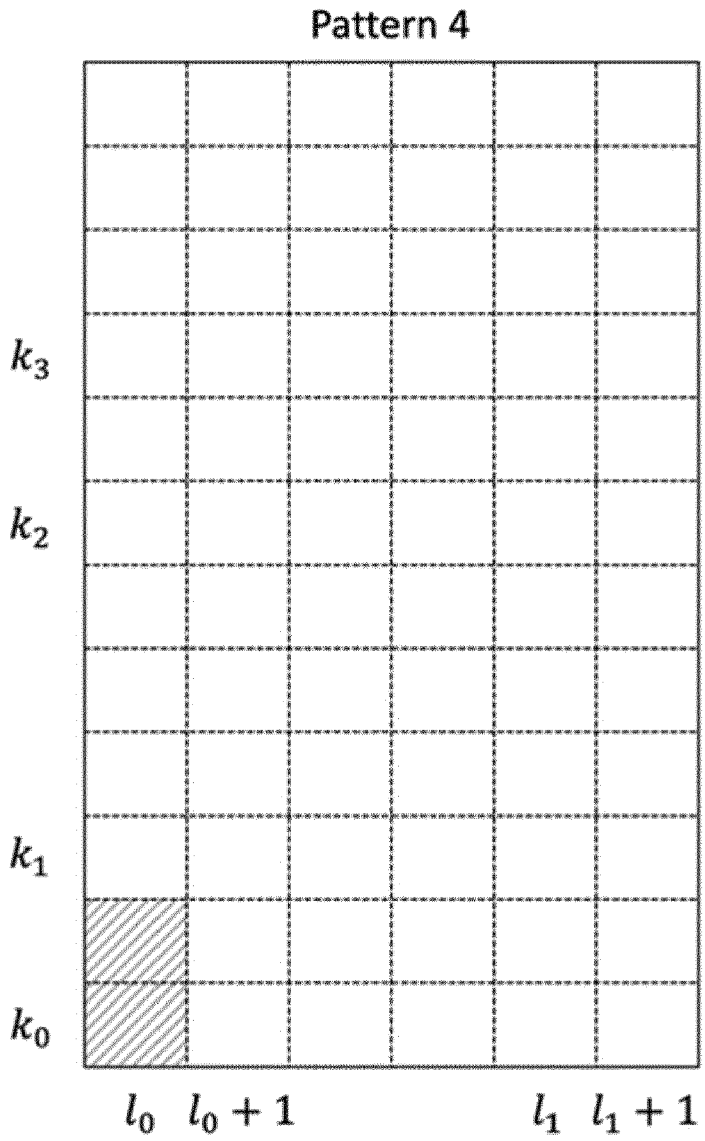


FIG.11D

1100E

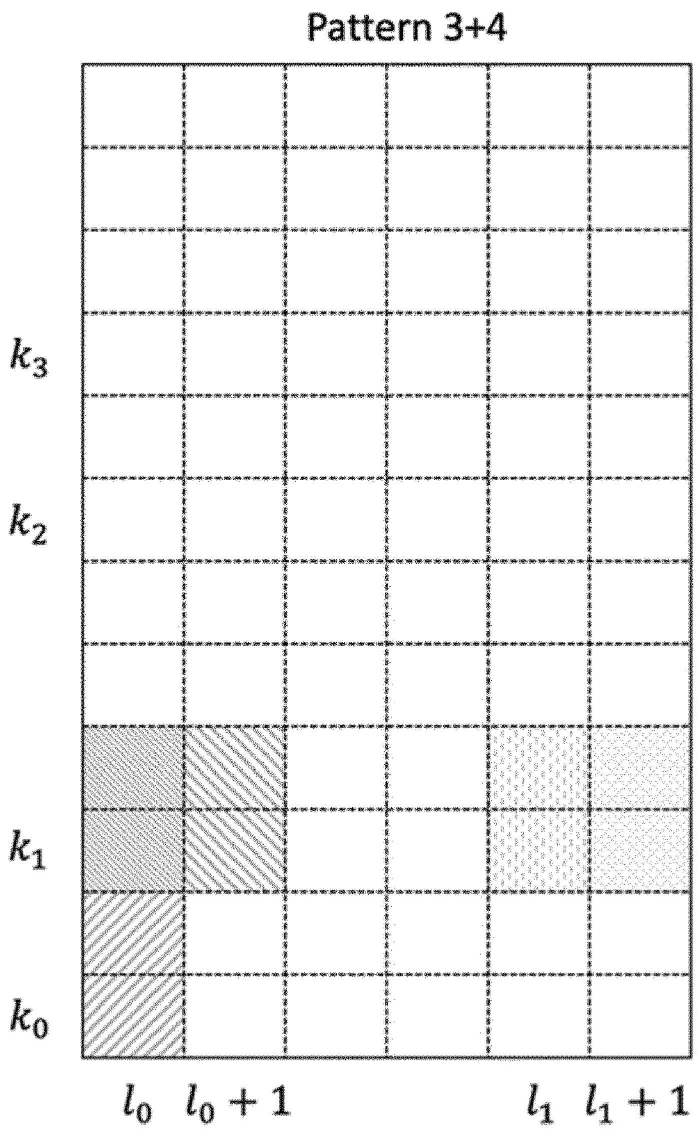


FIG.11E

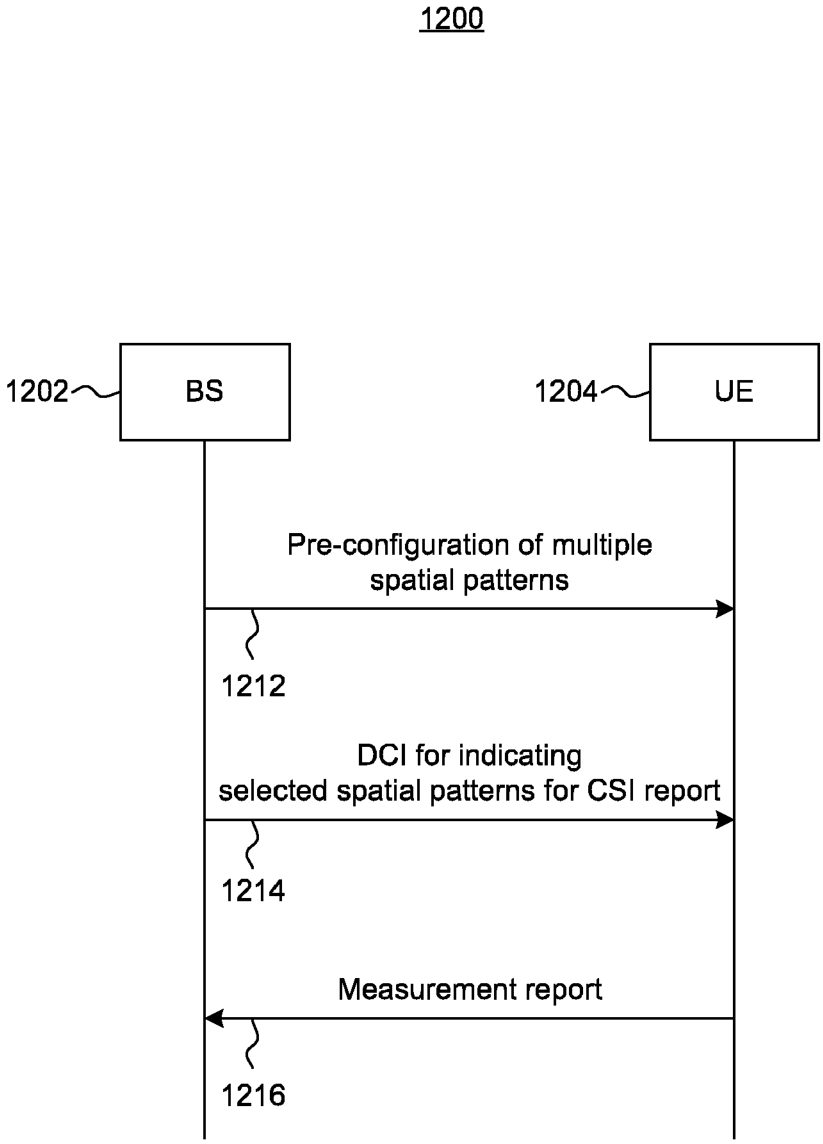
1200
1202
BS
1204
UE
Pre-configuration of multiple spatial patterns
1212
DCI for indicating selected spatial patterns for CSI report
1214
Measurement report
1216

FIG.12

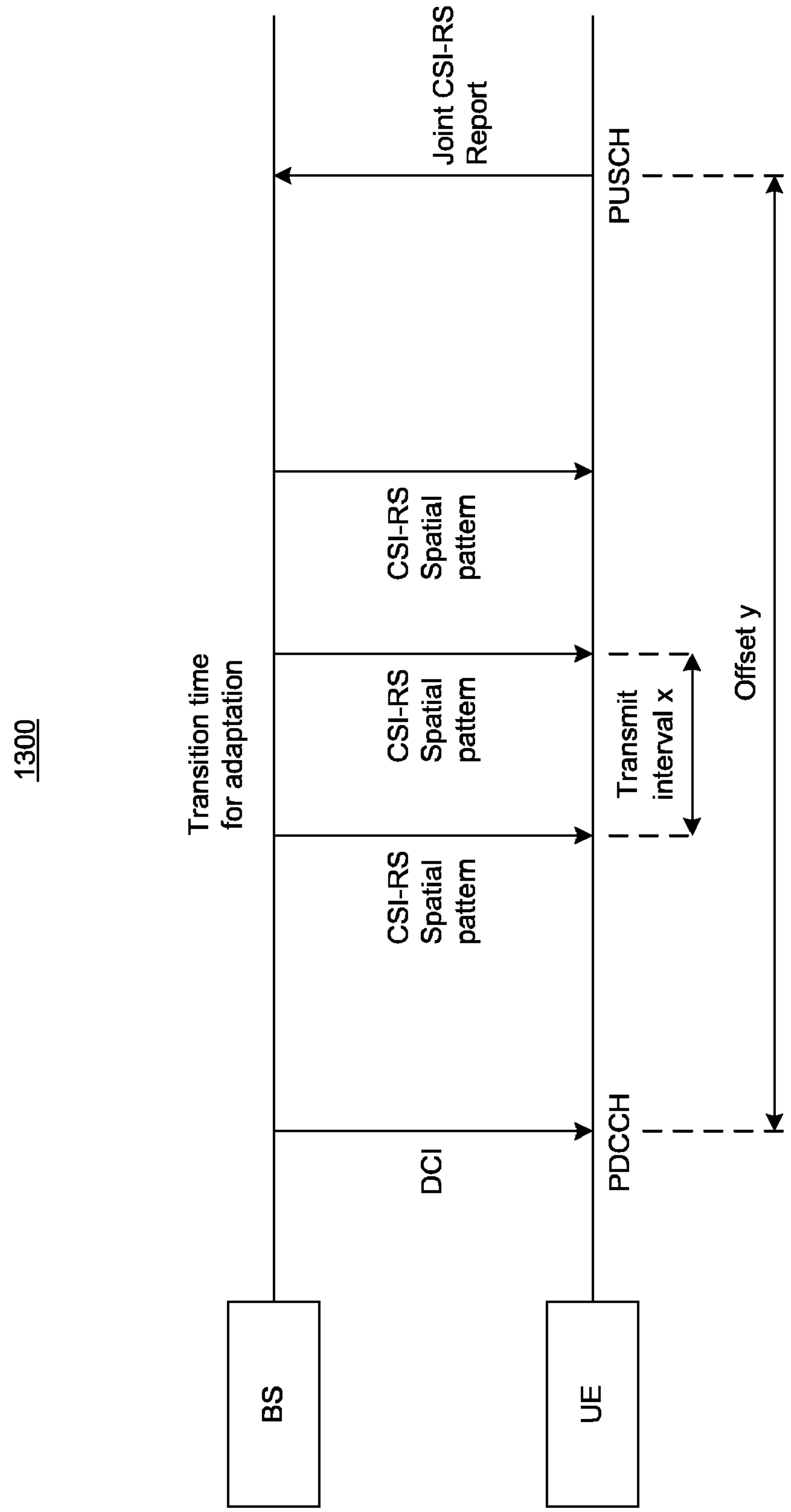
1300
BS
UE
DCI
PDCCH
CSI-RS Spatial pattern
CSI-RS Spatial pattern
CSI-RS Spatial pattern
Transition time for adaptation
Transmit interval x
Offset y
Joint CSI-RS Report
PUSCH

FIG.13

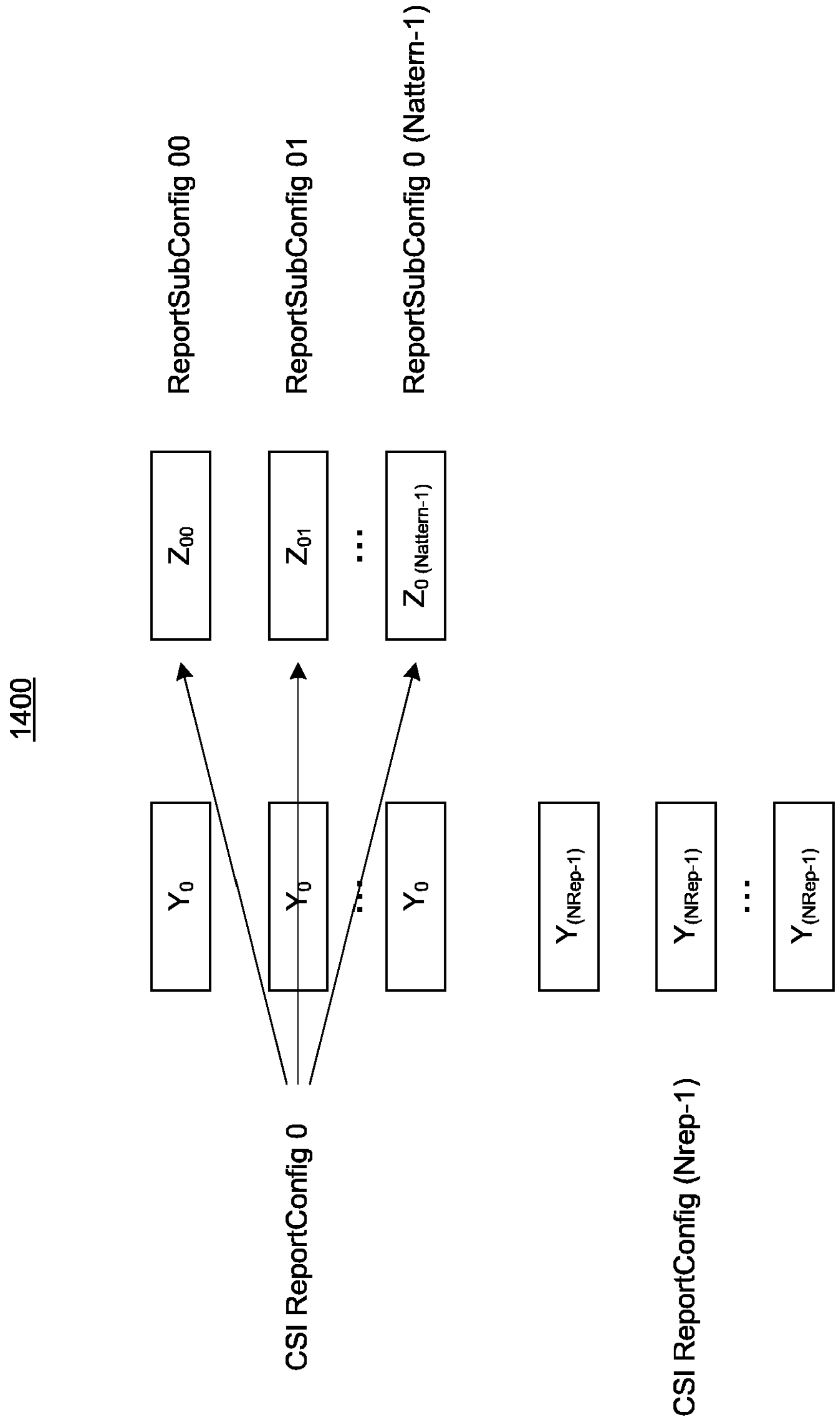
1400
ReportSubConfig 00
ReportSubConfig 01
ReportSubConfig 0 (Nattern-1)
Z00
Z01
...
Z0 (Nattern-1)
Y0
Y0
...
Y0
Y(NRep-1)
Y(NRep-1)
...
Y(NRep-1)
CSI ReportConfig 0
CSI ReportConfig (Nrep-1)

FIG.14

1500

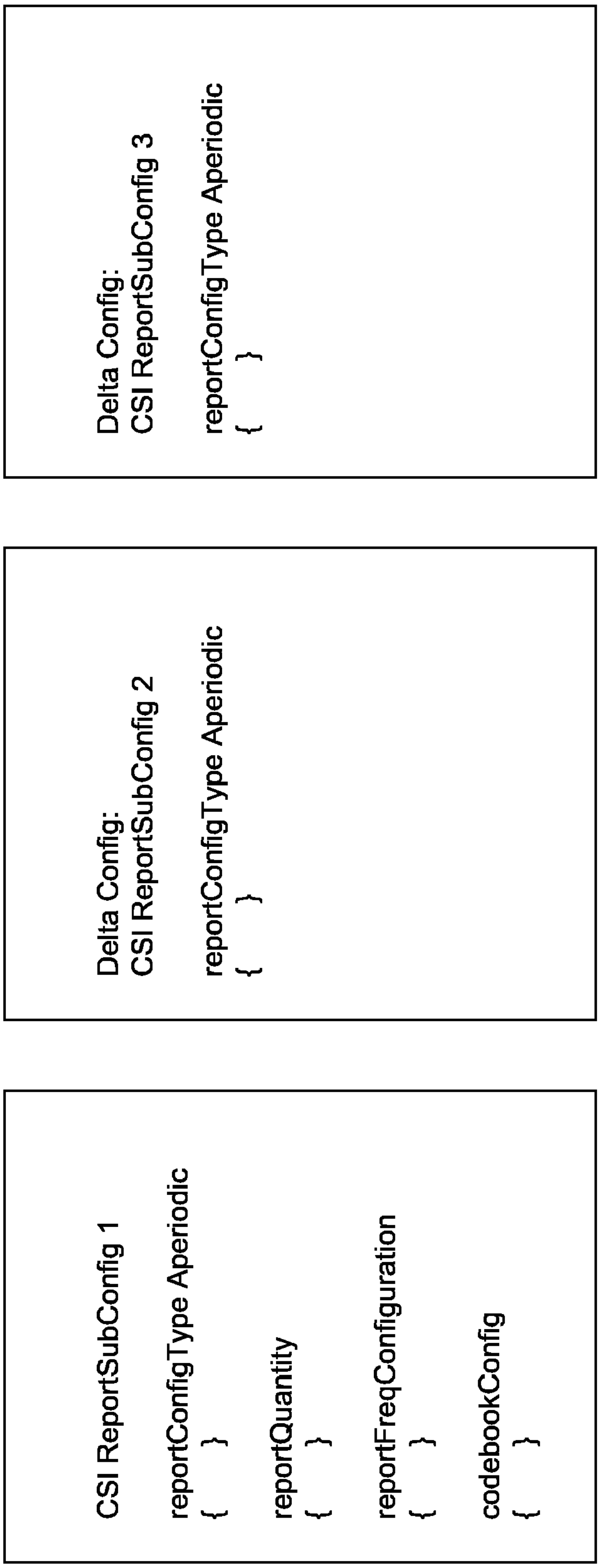
CSI ReportSubConfig 1
reportConfigType Aperiodic
{ }
reportQuantity
{ }
reportFreqConfiguration
{ }
codebookConfig
{ }
Delta Config:
CSI ReportSubConfig 2
reportConfigType Aperiodic
{ }
Delta Config:
CSI ReportSubConfig 3
reportConfigType Aperiodic
{ }

FIG.15

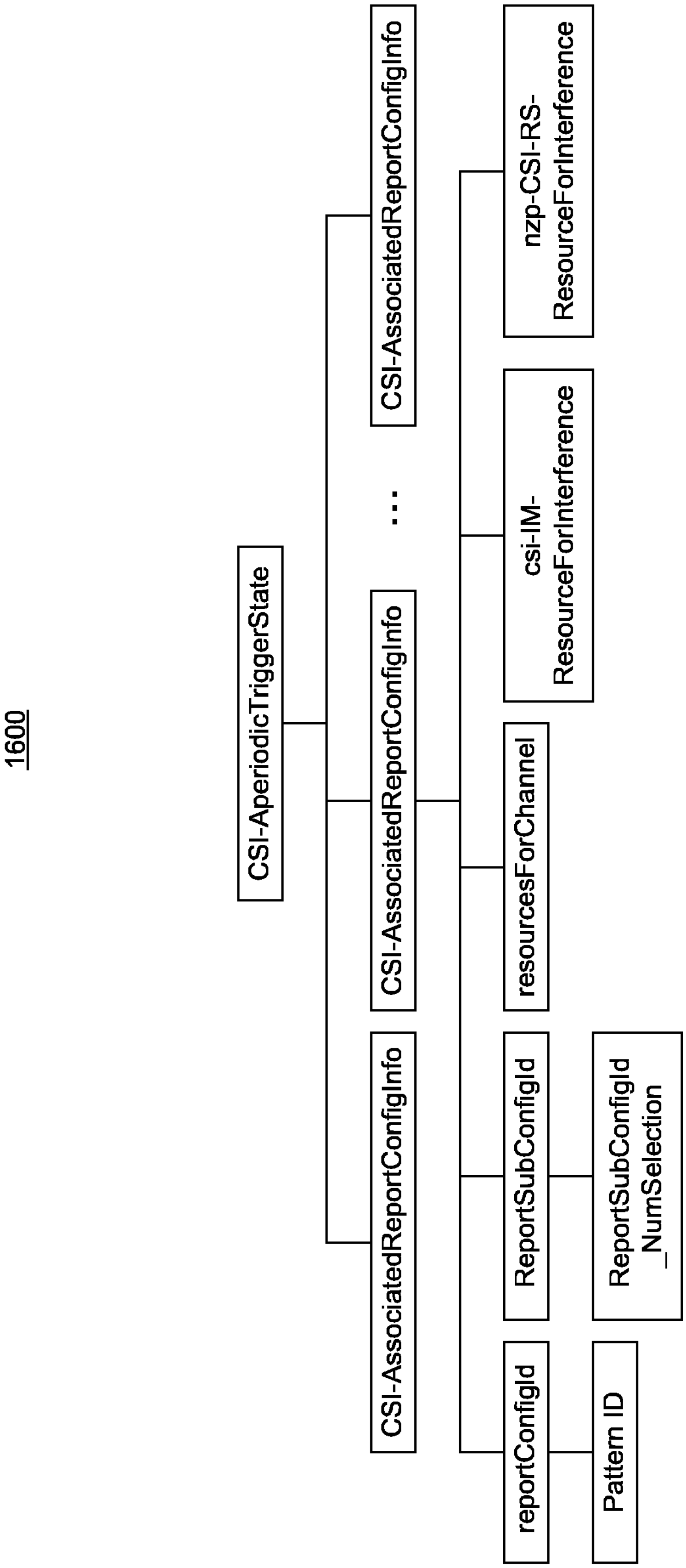
1600
CSI-AperiodicTriggerState
CSI-AssociatedReportConfigInfo
CSI-AssociatedReportConfigInfo
...
CSI-AssociatedReportConfigInfo
reportConfigId
Pattern ID
ReportSubConfigId
ReportSubConfigId _NumSelection
resourcesForChannel
csi-IM-ResourceForInterference
nzp-CSI-RS-ResourceForInterference

FIG.16

1700

| | | | | | | | | |
|---|---|---|---|---|---|---|---|---|
| R | Serving Cell ID | | | | | BWP ID | | OCT 1 |
| R | R | R | R | $S_3$ | $S_2$ | $S_1$ | $S_0$ | OCT 2 |

FIG.17

1800

| | | | | | | | | |
|---|---|---|---|---|---|---|---|---|
| P13 | Serving Cell ID | | | | | BWP ID | | OCT 1 |
| P12 | P11 | P10 | S1 | P02 | P01 | P00 | S0 | OCT 2 |

FIG.18

1900

| | | | | | | | | |
|---|---|---|---|---|---|---|---|---|
| P13 | Serving Cell ID 1 | | | | | BWP ID1 | | OCT 1 |
| P12 | P11 | P10 | S1 | P02 | P01 | P00 | S0 | OCT 2 |
| P13 | Serving Cell ID 2 | | | | | BWP ID2 | | OCT 3 |
| P12 | P11 | P10 | S1 | P02 | P01 | P00 | S0 | OCT 4 |

FIG.19

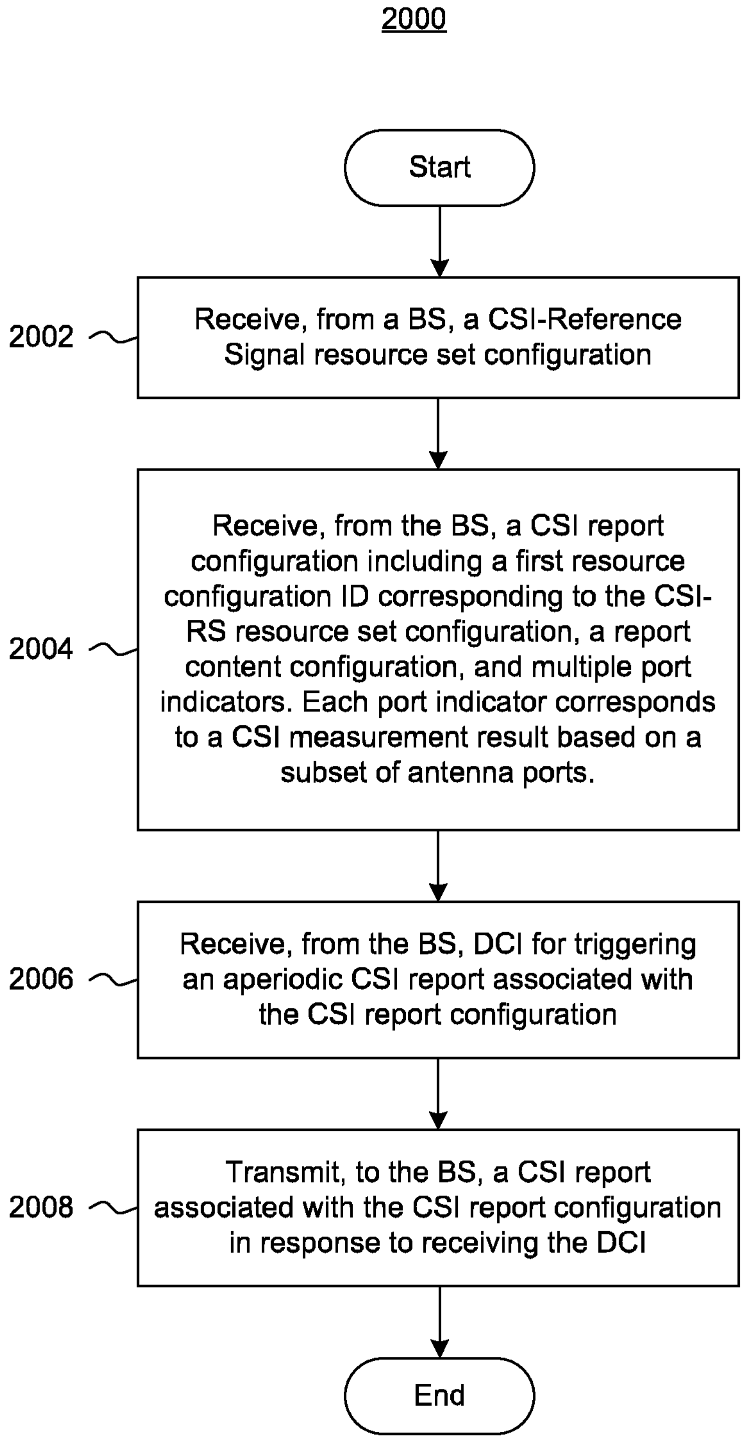
2000
Start
2002
Receive, from a BS, a CSI-Reference Signal resource set configuration
2004
Receive, from the BS, a CSI report configuration including a first resource configuration ID corresponding to the CSI-RS resource set configuration, a report content configuration, and multiple port indicators. Each port indicator corresponds to a CSI measurement result based on a subset of antenna ports.
2006
Receive, from the BS, DCI for triggering an aperiodic CSI report associated with the CSI report configuration
2008
Transmit, to the BS, a CSI report associated with the CSI report configuration in response to receiving the DCI
End

FIG.20

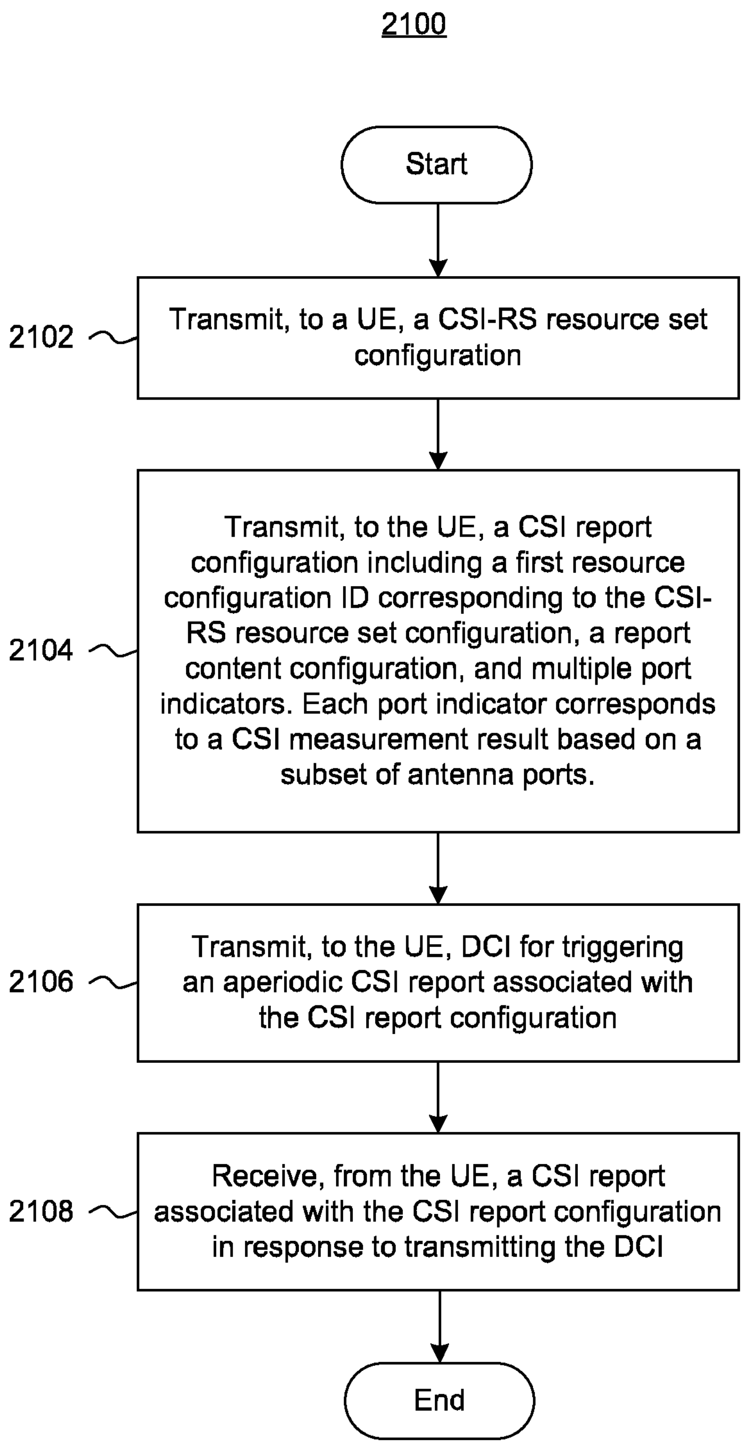
2100
Start
2102
Transmit, to a UE, a CSI-RS resource set configuration
2104
Transmit, to the UE, a CSI report configuration including a first resource configuration ID corresponding to the CSI-RS resource set configuration, a report content configuration, and multiple port indicators. Each port indicator corresponds to a CSI measurement result based on a subset of antenna ports.
2106
Transmit, to the UE, DCI for triggering an aperiodic CSI report associated with the CSI report configuration
2108
Receive, from the UE, a CSI report associated with the CSI report configuration in response to transmitting the DCI
End

FIG.21

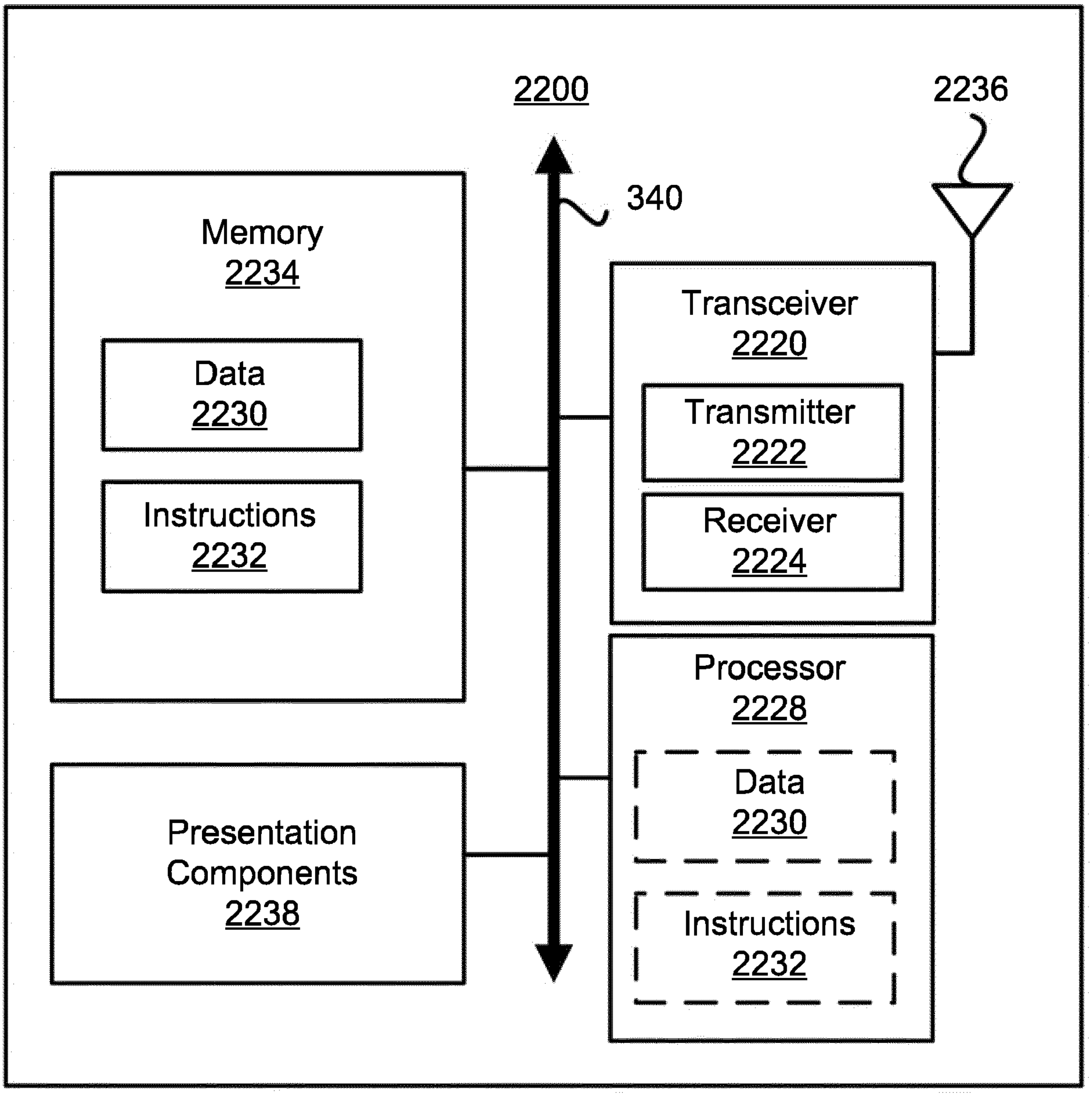
2200
2236
340
Memory
2234
Data
2230
Instructions
2232
Transceiver
2220
Transmitter
2222
Receiver
2224
Processor
2228
Data
2230
Instructions
2232
Presentation
Components
2238

FIG.22

Europäisches Patentamt
European Patent Office
Office européen des brevets

# EUROPEAN SEARCH REPORT

Application Number
EP 24 16 8847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/358503 A1 (HAO CHENXI [CN] ET AL) 12 November 2020 (2020-11-12)<br>* paragraphs [0072] - [0094] *<br>* figure 14 *<br>----- | 1-15 | INV.<br>H04L5/00<br>H04B7/00 |
| X | US 2021/328644 A1 (HAO CHENXI [CN] ET AL) 21 October 2021 (2021-10-21)<br>* paragraphs [0007] - [0014], [0074] - [0104] *<br>* figure 9 *<br>----- | 1-15 | |
| | | | TECHNICAL FIELDS SEARCHED (IPC) |
| | | | H04L<br>H04B |

The present search report has been drawn up for all claims

| Place of search | Date of completion of the search | Examiner |
|---|---|---|
| The Hague | 6 August 2024 | Kulin, Merima |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 16 8847

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | Publication date | Patent family member(s) | Publication date |
|---|---|---|---|
| US 2020358503 A1 | 12-11-2020 | CN 111095977 A | 01-05-2020 |
| | | EP 3682664 A1 | 22-07-2020 |
| | | US 2020358503 A1 | 12-11-2020 |
| | | WO 2019051634 A1 | 21-03-2019 |
| | | WO 2019052407 A1 | 21-03-2019 |
| US 2021328644 A1 | 21-10-2021 | CN 112703760 A | 23-04-2021 |
| | | EP 3854133 A1 | 28-07-2021 |
| | | US 2021328644 A1 | 21-10-2021 |
| | | WO 2020056708 A1 | 26-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63457440